# EUROPEAN PATENT APPLICATION

(11) **EP 1 705 564 A2**
(43) Date of publication of application: **27.09.2006**
(21) Application number: 06110755.3
(22) Date of filing: 07.03.2006
(51) Int. Cl.: G06F 9/44, G06F 9/46

(54) **Systems and methods for providing a system level user interface in a multimedia console**

(30) Priority: 08.03.2005 US 79720
(71) Applicant: MICROSOFT CORPORATION, Redmond, Washington 98052-6399 (US)
(72) Inventor: Macauley, James David, Redmond, WA 98052 (US); Furr, Kevin L., Redmond, WA 98052 (US); Malabuyo, Paolo V., Redmond, WA 98052 (US); Glaser, Russell, Redmond, WA 98052 (US)
(74) Representative: Grünecker, Kinkeldey, Stockmair & Schwanhäusser Anwaltssozietät

(57) **Abstract**

Systems and methods for providing a system level user interface that can be invoked at any time during operation of a multimedia console are provided, enabling a user to interact with system level user data and/or initiate secondary behaviors or functionality not normally possible to achieve when the multimedia console is engaged only by a primary application. The system level user interface may either interrupt, e.g., pause, the primary application or allow the primary application to continue, and simultaneously displaying the operation of the primary application and the system level user interface. In one embodiment, the system level user interface layer is called a "Head's Up" Display, or HUD, and the HUD is invocable via peripheral input means, such as a button on a controller or remote device, and the HUD enables the user to perform secondary system level tasks not available through the primary gaming application. In one embodiment, the HUD operates using only a pre-defined subset of system resources, so that the primary application is guaranteed a pre-defined level of performance.

## Description

### FIELD OF THE INVENTION

This invention generally relates to the provision of a system level user interface of a multimedia console. More particularly, the invention relates to the provision of a user interface, invocable by a user of a gaming console at any time, providing functionality for the user separate from a gaming application executing on the multimedia console.

### BACKGROUND OF THE INVENTION

Multimedia consoles, such as video game consoles, historically have functioned principally to play video games, i.e., when a user inserts a gaming cartridge, DVD, or otherwise loads a gaming program into the video game console, the video game console responds by engaging the resources of the video game console with the tasks involved in playing the gaming program. Thus, historically, video game consoles have been dedicated to the task of playing games. In recent years, some video game consoles have evolved to possess functionality beyond the scope of what is strictly a "game." For instance, many gaming consoles, such as the Xbox® from Microsoft®, can also play music if a music CD is inserted into the console, or if the DVD dongle is present, the Xbox can decode and render movie content from DVDs. In short, if a DVD is inserted, movies can be played and if CDs are inserted, music can be played, and of course, if a game is inserted, the game is played, as always. Without any media inserted into the Xbox, a start screen is displayed in which a user can change certain settings, engage the music player, etc., but once the user decides to use an application, e.g., the music player, the DVD player, or a gaming application, the multimedia console leaves the start screen to engage that application exclusively.

In essence, therefore, a user cannot interact with system level user data, e.g., change passwords, send messages to other users, or play music, or otherwise engage with any secondary resources or secondary applications other than the primary music CD, DVD, or game application being played by the multimedia console. Thus, there is a need for systems and methods that would allow a user to invoke a system level display at any time during operation of the multimedia console whereby a user could interact with user data and/or initiate secondary behaviors or functionality not normally possible to achieve through the primary application itself It would also be desirable to be able to engage the system level display with the capability to choose by the application whether the system level display disrupts (e.g., pauses) the flow of the primary application or not.

### SUMMARY OF THE INVENTION

The invention is directed to systems and methods for providing a system level user interface that can be invoked at any time during operation of a multimedia console, enabling a user to interact with system level user data and/or initiate secondary behaviors or functionality not normally possible to achieve when the multimedia console is engaged only by a primary application. In various embodiments, the system level user interface may either interrupt, e.g., pause, the primary application or allow the primary application to continue, and simultaneously displaying the operation of the primary application and the system level user interface. In one embodiment, the system level user interface layer is called a "Head's Up" Display, or HUD, and the HUD is invocable via peripheral input means, such as a button on a controller or remote device, and the HUD enables the user to perform secondary system level tasks not available through the primary gaming application. In one embodiment, the HUD operates using only a pre-defined subset of system resources, so that the primary application is guaranteed a pre-defined level of performance.

Additional features of the invention will be apparent with reference to the accompanying drawings and the following description of illustrative embodiments of the invention.

### BRIEF DESCRIPTION OF THE DRAWINGS

The file of this patent contains at least one drawing executed in color. Copies of this patent with color drawings will be provided by the Office upon request and payment of the necessary fee.

The foregoing summary, as well as the following detailed description of illustrative embodiments, is better understood when read in conjunction with the appended drawings. For the purpose of illustrating the invention, the drawings show illustrative embodiments of the invention; however, the invention is not limited to the specific methods and instrumentalities disclosed in the drawings, in which:

Fig. 1 is a block diagram showing an exemplary multimedia console, in which aspects of the invention may be implemented;

Fig. 2 is a block diagram showing further details of the exemplary multimedia console of Fig. 1, in which aspects of the invention may be implemented;

Figs. 3A to 3F illustrate various non-limiting HUD embodiments in accordance with the invention;

Fig. 4 is a diagram of a user controller with a pre-defined button for use with the HUD in accordance with an aspect of the invention;

Fig. 5 illustrates an exemplary handling of multiple notifications in accordance with the display of a HUD in accordance with the invention;

Figs. 6A and 6B illustrate exemplary information displayed as a header of a HUD in accordance with non-limiting embodiments of the invention;

Figs. 7A and 7B illustrate the exemplary LED correspondence between LEDs on a controller or multimedia console and the ring of light displayed at pre-defined place on the HUD in accordance with non-limiting embodiments of the invention;

Figs. 8A to 8C illustrate additional information that may be displayed by the HUD in accordance with various non-limiting embodiments of the invention

Figs. 9A and 9B illustrate various aspects of the functionality and UI presented for the HUD with respect to voice chatting in accordance with the invention;

Figs. 10A and 10B illustrate various aspects of the functionality and UI presented for the HUD of the invention with respect to media playing;

Figs. 11 A and 11B illustrate various aspects of the functionality and UI presented for changing various settings and for changing on-line status in accordance with non-limiting embodiments of the HUD of the invention;

Figs. 12A and 12B illustrate a generic HUD and windowing theme applied in accordance with embodiments of the invention;

Fig. 13 is a flow diagram illustrative of invoking and deconstructing the HUD in accordance with the invention;

Fig. 14 is a block diagram representing an exemplary computing device suitable for use in conjunction with various aspects of the invention; and

Fig. 15 illustrates an exemplary networked computing environment in which many computerized processes, including those of various aspects of the invention, may be implemented.

### DETAILED DESCRIPTION OF ILLUSTRATIVE EMBODIMENTS

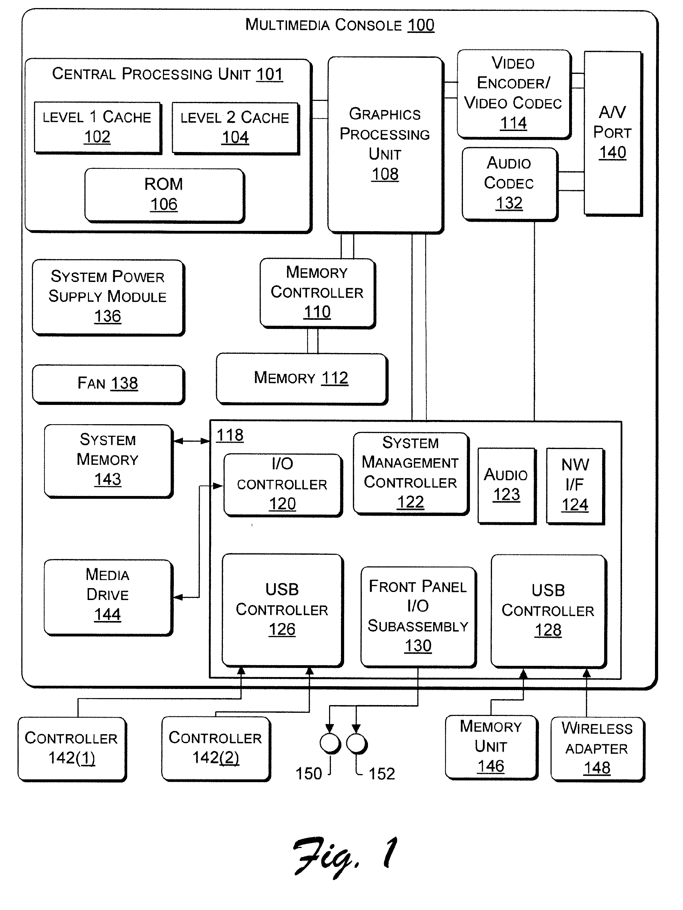

Referring first to Fig. 1, shown is a block diagram illustrating an exemplary multimedia console, in which aspects of the invention may be implemented. Fig. 1 shows the functional components of a multimedia console 100 in which aspects of the invention may be implemented. The multimedia console 100 has a central processing unit (CPU) 101 having a level 1 (L1) cache 102, a level 2 (L2) cache 104, and a flash ROM (Read-only Memory) 106. The level 1 cache 102 and level 2 cache 104 temporarily store data and hence reduce the number of memory access cycles, thereby improving processing speed and throughput. The flash ROM 106 may store executable code that is loaded during an initial phase of a boot process when the multimedia console 100 is powered. Alternatively, the executable code that is loaded during the initial boot phase may be stored in a FLASH memory device (not shown). Further, ROM 106 may be located separate from CPU 101.

A graphics processing unit (GPU) 108 and a video encoder/video codec (coder/decoder) 114 form a video processing pipeline for high speed and high resolution graphics processing. Data is carried from the graphics processing unit 108 to the video encoder/video codec 114 via a bus. The video processing pipeline outputs data to an A/V (audio/video) port 140 for transmission to a television or other display. A memory controller 110 is connected to the GPU 108 and CPU 101 to facilitate processor access to various types of memory 112, such as, but not limited to, a RAM (Random Access Memory).

The multimedia console 100 includes an I/O controller 120, a system management controller 122, an audio processing unit 123, a network interface controller 124, a first USB host controller 126, a second USB controller 128 and a front panel I/O subassembly 130 that are preferably implemented on a module 118. The USB controllers 126 and 128 serve as hosts for peripheral controllers 142(1)-142(2), a wireless adapter 148, and an external memory unit 146 (e.g., flash memory, external CD/DVD ROM drive, removable media, etc.). The network interface 124 and/or wireless adapter 148 provide access to a network (e.g., the Internet, home network, etc.) and may be any of a wide variety of various wired or wireless interface components including an Ethernet card, a modem, a Bluetooth module, a cable modem, and the like.

System memory 143 is provided to store application data that is loaded during the boot process. A media drive 144 is provided and may comprise a DVD/CD drive, hard drive, or other removable media drive, etc. The media drive 144 may be internal or external to the multimedia console 100. Application data may be accessed via the media drive 144 for execution, playback, etc. by the multimedia console 100. The media drive 144 is connected to the I/O controller 120 via a bus, such as a Serial ATA bus or other high speed connection (e.g., IEEE 1394).

The system management controller 122 provides a variety of service functions related to assuring availability of the multimedia console 100. The audio processing unit 123 and an audio codec 132 form a corresponding audio processing pipeline with high fidelity and stereo processing. Audio data is carried between the audio processing unit 123 and the audio codec 126 via a communication link. The audio processing pipeline outputs data to the A/V port 140 for reproduction by an external audio player or device having audio capabilities.

The front panel I/O subassembly 130 supports the functionality of the power button 150 and the eject button 152, as well as any LEDs (light emitting diodes) or other indicators exposed on the outer surface of the multimedia console 100. A system power supply module 136 provides power to the components of the multimedia console 100. A fan 138 cools the circuitry within the multimedia console 100.

The CPU 101, GPU 108, memory controller 110, and various other components within the multimedia console 100 are interconnected via one or more buses, including serial and parallel buses, a memory bus, a peripheral bus, and a processor or local bus using any of a variety of bus architectures.

When the multimedia console 100 is powered on or rebooted, application data may be loaded from the system memory 143 into memory 112 and/or caches 102, 104 and executed on the CPU 101. The application may present a graphical user interface that provides a consistent user experience when navigating to different media types available on the multimedia console 100. In operation, applications and/or other media contained within the media drive 144 may be launched or played from the media drive 144 to provide additional functionalities to the multimedia console 100.

The multimedia console 100 may be operated as a standalone system by simply connecting the system to a television or other display. In this standalone mode, the multimedia console 100 may allow one or more users to interact with the system, watch movies, listen to music, and the like. However, with the integration of broadband connectivity made available through the network interface 124 or the wireless adapter 148, the multimedia console 100 may further be operated as a participant in a larger network community.

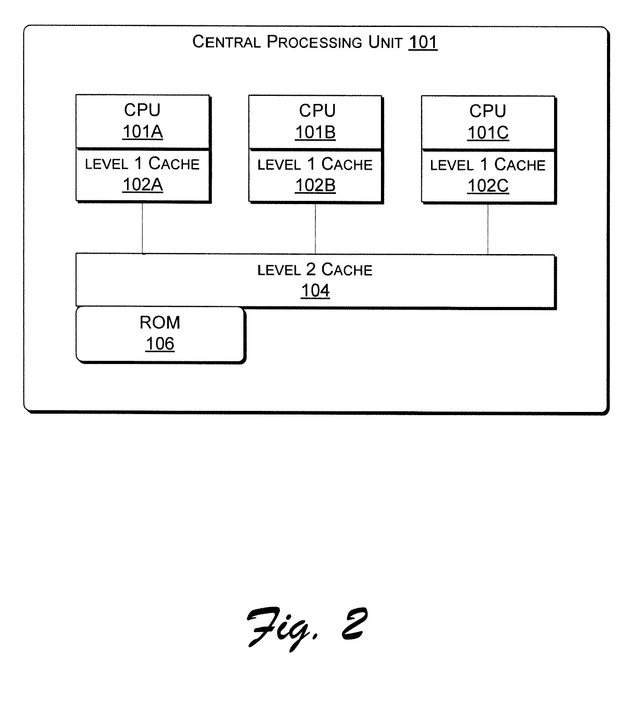

Referring next to Fig. 2, shown are further details of the exemplary multimedia console of Fig. 1. As shown in Fig. 2, CPU 101 comprises three CPUs: CPU 101 A, CPU 101B, and CPU 101C. As shown, each CPU has a corresponding L1 cache 102 (e.g., L1 cache 102A, 102B, and 102C, respectively). As shown, each CPU 101A-C is in communication with L2 cache 104. As such, the individual CPUs 101 A, B, and C share L2 cache 104. Because L2 cache 104 is shared between multiple CPU's, it may be complex to implement a technique for reserving a portion of the L2 cache for system applications. While three CPUs are illustrated, there could be any number of CPUs.

The multimedia console depicted in Figs. 1 and 2 is a typical multimedia console that may be used to execute a multimedia application, such as, for example, a game. Multimedia applications may be enhanced with system features including for example, system settings, voice chat, networked gaming, the capability of interacting with other users over a network, e-mail, a browser application, etc. Such system features enable improved functionality for multimedia console 100, such as, for example, players in different locations can play a common game via the Internet.

Also, over time, system features may be updated or added to a multimedia application. Rather than requiring the multimedia developer to make significant modifications to the multimedia application to provide these system features, the systems and methods described herein allow a multimedia developer to provide system features through separate system applications that work in conjunction with the multimedia application. For example, a system application may embody functionality related to networked capabilities, thereby enabling a multimedia application to be readily adapted to provide networked capabilities with little work by the multimedia (e.g., game) developer. The system level user interface of the invention can expose all such system level functionality to the user as it exists today, and as may be desirable to expose to the user in the future.

### System Level User Interface Experience

In accordance with the invention, users have a new system interaction model that delivers an improved user experience granting the user ubiquitous access to platform defining system and service functionality. In one embodiment, controllers and peripherals for the multimedia console of the invention include an additional piece of hardware, such as a button, for invoking a "Head's Up" Display, or HUD. Via this button, the user can access an always running system UI: the HUD. IN a non-limiting exemplary embodiment, the HUD gives the user quick and easy access to the following system functionality at launch:
- Logon/out
- Profile creation and management
- A user's personal mini-gamercard, displaying crucial top-level stats and status and giving the user access to his/her full gamer profile
- Message Center
- Friends
- Recent Players
- Voicechat- 1:1 1 private voicechat conversations outside the scope of any particular game
- The HUD mini music player - allowing the user to play custom playlists while in-game
- Options - important options such as online presence, voicechat volume and mute settings, controller rumble levels and personalization options for the HUD
- Game Spotlight - ubiquitously accessed game provided content
- Turn off console, Switch profile or Sign out
- Exit to Dashboard

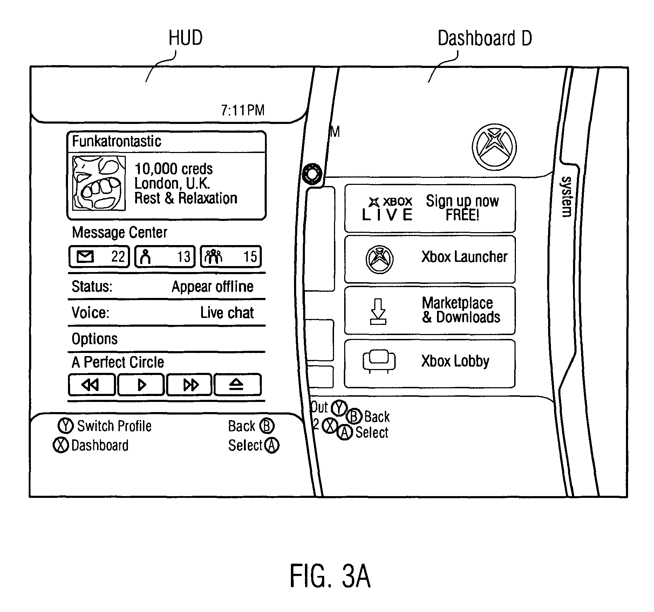

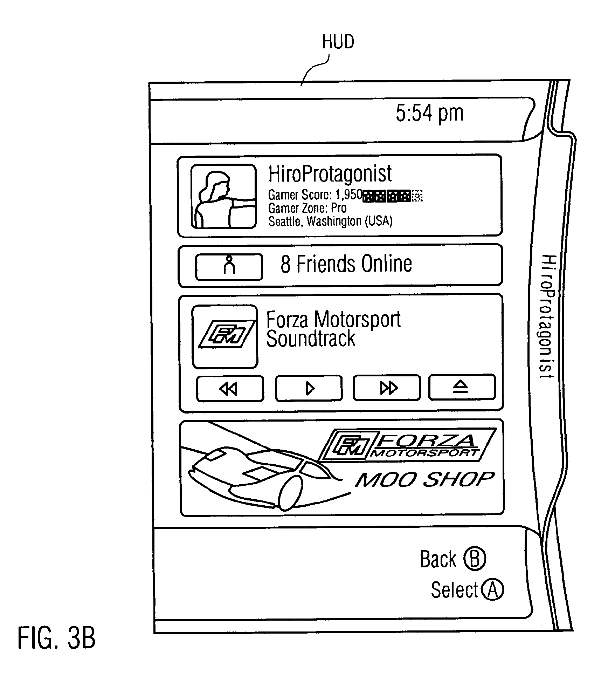

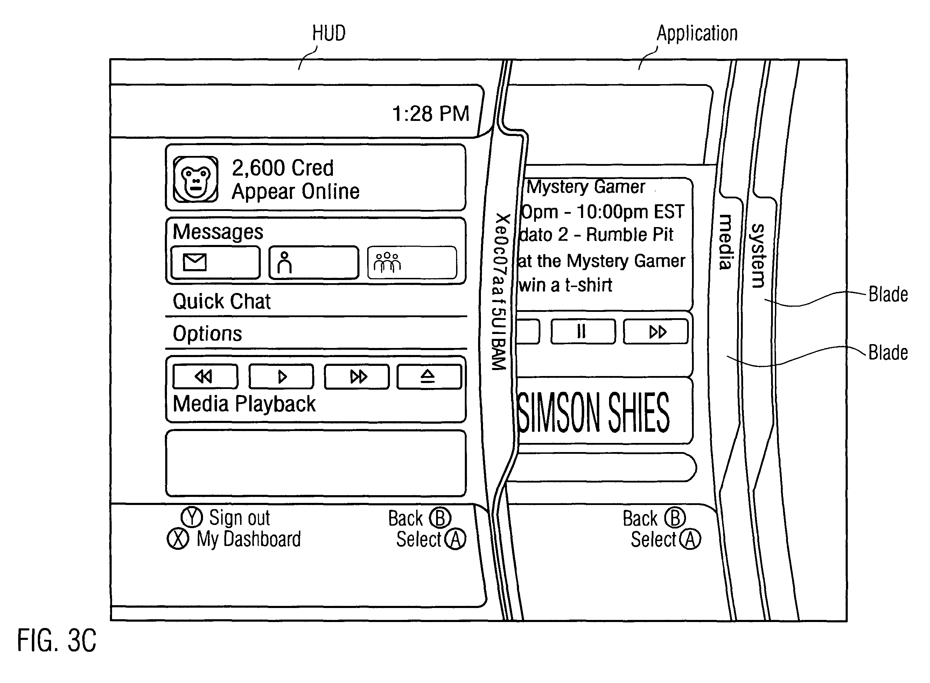

Furthermore, additional system functionality will live in the concurrent system space and will be invocable via API calls by games and an exclusive full screen Dashboard. Figs. 3A to 3F illustrate various exemplary and non-limiting illustrations of HUD embodiments in accordance with the invention. For instance, Fig. 3A shows an exemplary look and feel of the HUD overlaying the Dashboard D, although it reflects exemplary non-limiting HUD UI elements. These feature areas include:
- Marketplace
- Device Selection
- 1-4 player logon
- Player review
- Gamercard view

Because the multimedia console has an always running, separate, system space, requirements for game developers to support certain functionality such as a friends list and in-game notifications will be significantly reduced. Now, users will be able to access most system/service-wide functionality from the HUD. This model significantly reduces requirements for game developers while giving the user the latest and greatest functionality for all of the console's game titles.

Additionally, the HUD can be updated via on line gaming services, such as Xbox Live, or game disc updates allowing the platform team to truly create an evolvable platform. When new functionality is made available, users can receive simple update(s) that immediately takes effect regardless of what title the user is playing.

The user thus has a consistent and familiar user experience, title developers have an easier time developing on the platform, and the platform team can more easily evolve the platform with knowledge that the user will have access to the functionality from anywhere at anytime.

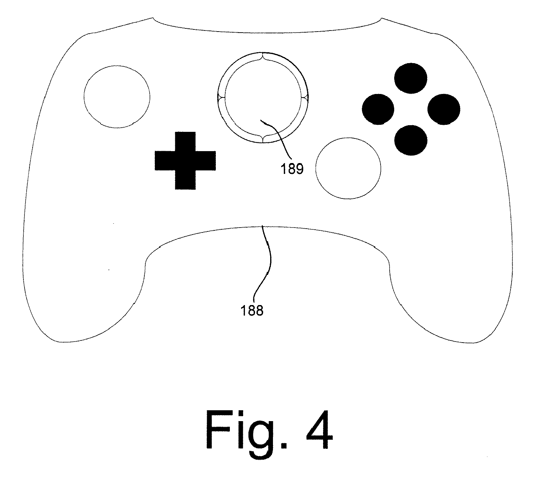

Herein, with respect to taxonomy, the HUD refers to the in-game user interface, or guide experience accessed by pressing a pre-defined button or selecting an in-game button that calls into the HUD. Fig. 4 illustrates an exemplary controller 188 with a button 189 that provides dedicated access to the HUD in accordance with the invention. In one non-limiting exemplary embodiment, all menu options run concurrently with games or other applications except "Exit to Dashboard," or "Turm off Xbox/console," which asks the user if he or she wants to exit the current game to access the Dashboard or turn off the console.

Herein, the dashboard refers to the fullscreen guide experience accessed by selecting "Exit to Dashboard" from the HUD or by booting the multimedia console with the DVD tray open or empty. The Dashboard takes full advantage of system resources in order to give the user additional functionality than the HUD is capable of offering.

Herein, the half-screen HUD (Small Overlay) refers to the concurrent system UI provided in accordance with the invention that slides in from the left-hand side of the screen and takes up no more than 50% of the screen. In contrast, the full-screen HUD (Large Overlay) refers to the concurrent UI provided in accordance with the invention that is larger than the half-screen concurrent UI, but does not necessarily take up the full screen. For full-screen concurrent UI, a game being concurrently played may continue in the background. In an exemplary embodiment, if the game is rendering at 1080i, the resolution at which the game is playing is decreased to 720 lines.

Herein, a notification refers to a "toast" pop-up including a notification specific icon, a short notification description and the Gamertag of the sender. Notifications can be sent by the Live service or by the system.

The Toast Heads Up Display (THUD) is an interface style relying on press-and-hold functionality of the HUD button to access 4 (up/down/left/right) quick shortcuts into other applications. The THUD feature is optional in accordance with the invention, as a shortcut to various functionality provided by the HUD of the invention.

The HUD achieves each of the following goals in accordance with the invention:
- Quick and easy access to system functionality: The HUD gives the user ubiquitous access to the most important and frequently used tasks. By defining a clear HUD access model via a dedicated Button, users have the ability to access system functionality from anywhere at anytime.
- Reduction of the platform entry fee for developers: In previous multimedia gaming systems, adding additional platform features often implied additional testing and certification requirements and work by title developers. Some of the Live (on-line gaming) features such as Friends, recent players, etc. came with such a cost that some developers chose not to Live-enable their respective titles. Thus, the HUD alleviates requirements for title developers in order to grow platform developer support and to allow developers to spend more time focusing on the specifics of their titles.
- An evolvable platform: By providing functionality that is updatable and accessible from anywhere at anytime, the platform has the opportunity to grow over time. By removing various functionality from individual games and placing it in the HUD, system and service features can be more rapidly updated with fewer restrictions by existing titles. It is important to build extensibility into the design of the HUD and to give room for growth by the system resource limitations set at launch.
- A consistent user experience: The system UI of the invention plays a more significant role in the user's day-to-day interaction with the gaming console. The user can learn how the system UI works and trust that all parts of the system, including future additions, feel and work in a consistent manner.
- Simplicity, simplicity, simplicity: Although the feature set is always growing to incorporate new and improved features, the HUD is designed around a simple-to-understand, simple-to-use interface. As the target audience for the platform continues to expand beyond the hardcore gamer, it is ever important to provide users with functionality that is not over-engineered and an interface that is intuitive and usable.
- An edgy and exciting user experience: With the introduction of the HUD, gaming platforms will provide gamers with a whole new way to interact with their game console and with the global on-line gaming community.
- Limited system resource requirements: The HUD will run concurrently with all games. Therefore, the more system resources reserved for the HUD, the fewer system resources will be available for developers to use for making great games. Though the HUD needs enough resources to support the above goals, the HUD takes up as few system resources as possible (e.g., a small percentage of the overall processing and memory resources).

In various embodiments, while the HUD is a system level UI, gaming developers are given some degree of integration by including access to special portions of the HUD such as a HUD advertising or content banner, a community panel button shortcut to game UI, extensibility of tabs within the community and extensibility of the contextual gamer options menu.

The following is a list of feature areas that are integrated, in some way, with the HUD in accordance with the invention. Next to each feature area is a link to the respective spec.
- Gamer Profiles
- Profile Sign-in
- Profile Creation
- Profile Migration/Recovery
- Notifications
- Affiliates List
- Message Center
- Player Review / Feedback
- Rich Presence
- Media Playback API
- Mini-Media Player Play list Selector
- Dashboard Media Player
- Marketplace
- Virtual Keyboard As mentioned, the HUD will run concurrently with games/movies/etc. The HUD relies on a limited set of system resources and resource constraints for the entire system while running concurrently with a game are set very carefully. The different system components are prioritized in order to come to a hard limit for HUD system resource usage.

The HUD main menu is accessed by pressing the a HUD button, such as button 189 of Fig. 4. If a notification is onscreen for a specific user and that user's controller is active (e.g., another player is not currently in the HUD) and presses the HUD button, he or she is navigated to the appropriate notification response screen within the HUD.

Games and applications can also invoke certain areas of the HUD. Some of these areas cannot be accessed in any other way. When invoked by a game or application, the user will be navigated to one of the following areas of the HUD:
- Community
   o Message Center
   o Friends
   o Recent Players
- Marketplace
   o Publisher specific area
   o Title specific area
   o Content specific area
- Device Selector
- Gamercard w/ contextual gamer options menu
- Player Review
- Sign-in
- Music Playlist Selector
- Achievements
- Universal Error Handler

On successful load of the HUD, the game will be notified via the application manager that focus has been taken away from the game and given to the HUD. At this point, the game will be required to pause the game if the game is otherwise in a pausable state. Titles that are in a system-link or Live multiplayer situation would not be required to pause.

Each of these entry points into the HUD, however, place the user on different screens, following all of the rules defined for the HUD. Pressing the HUD button even after accessing part of the HUD from within game will dismiss the HUD and return focus to the game. Control is locked to one controller while in the HLTD. Games are required to pass the controller that instigated the call into the HUD, so that all other controllers can be correctly locked.

In various embodiments, the HUD is inactive (including all notifications) during the initial system boot animation. While the boot animation is playing, pressing the HUD button will do nothing. Once the boot animation resolves, the user will be able to press the HUD button to access the HUD. Auto-sign-in notifications are queued until the boot animation resolve, as well.

While a notification is onscreen and the recipient of the notification (with an active controller) presses the HUD button, the user will be navigated to the correct contextual location within the HUD based on the notification. If the player was previously in the HUD, for instance, pressing B after being navigated away based on the notification, will return the user to the previous screen. Individual applications store their state before being unloaded in order to navigate the user to the notification specific UI.

The following is an exemplary non-limiting list of all notification types and where the user will be navigated to on a HUD button press:

| Notification Type | Navigation destination on HUD button |
|---|---|
| Successfully signed-in to Live | HUD main menu |
| Unable to sign-in to Live | Error message with option to troubleshoot |
| Friend has come online | Contextual gamer options menu for specific friend |
| Game invitation received | Game invitation message view in Message Center |
| Message received | Message view in Message Center |
| Voicechat invite received | Voicechat invite view in Message center |
| Queued Notifications (>7 notifications) | Message Center |
| Friend request received | Friend request messae in message center |
| Player joined chat session | Voicechat screen |
| Player left chat session | Voicechat screen |
| USB device detected | Contextual based on device (media, memory, |
| | settings) |
| Low-battery warning | Controller managements area within Options |
| Low-wireless signal strength | Controller management area within Options |
| Battery has died | No HUD button action, this is a modal error message |
| Battery charging | Controller area within Options |
| Battery charged | Controller area within Options |
| Wireless controller found and assigned to virtual port? | Controller area within Options |
| Controller disconnect or signal strength (error message). | Error message |

Specific notification destination screens handle forward progress correctly. For example, accepting a friend request will close the HUD and return focus to the game. There is no method designed to allow the user to go from a notification specific screen to another location within the HUD. Pressing the HUD button will close the HUD and return focus to the game. In one embodiment, pressing B/BACK from the contextual HUD view will return focus to the game if the HUD navigation stack is empty or to the previously viewed screen if not.

In one embodiment of the invention, pressing the HUD button while a notification is onscreen takes action on the notification. If the user is already in the HUD, the user is navigated to the appropriate notification screen within the HUD. Pressing B returns the user to the previous screen of the primary HUD flow.

Each of the HUD applications thus stores state on unload. This stored state is used to rehydrate a specific application on a B button press from the notification specific navigation.

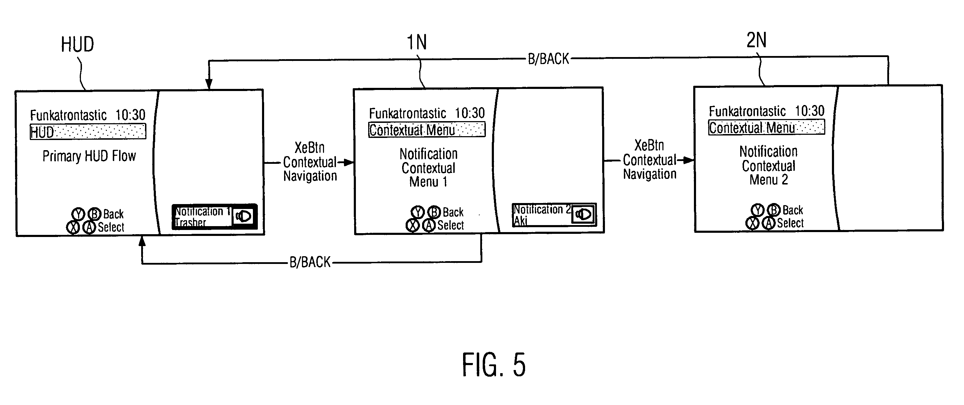

As illustrated in Fig. 5, only one contextual navigation is stored on the navigation stack. If the user receives a second notification 2N after already responding to a first notification 1N and presses the HUD button, he/she will be navigated appropriately based on the second notification. However, pressing B from the second navigate will return the user to the primary HUD flow.

In one embodiment, while in the HUD, notifications are displayed in the bottom-right corner of screen. This location is set differently than how games specify the notification location to prevent the HUD from overwriting the games' notification location(s). While in HUD, all notifications are rendered using the HLTD's notification location. This location can be updated by individual system applications where necessary (e.g., via a virtual keyboard, etc.)

If a notification is not onscreen, in one embodiment of the invention, pressing the HUD button will toggle the HUD. If the user has accessed the HUD either by pressing the HUD button or by the game calling one of the above APIs, the HUD will be dismissed and the focus will be returned to the game or other app. The user can also dismiss the HUD by pressing B/BACK from the entry point screen (e.g. the main menu or specific notification screen, etc.). On return to the game or other application, the game will receive an event from the application manager informing the game that focus has been returned.

While a user is navigating the main menu of a game or the Dashboard, in one non-limiting embodiment, all controllers are required to be active and able to navigate the menus. Once a game session is started, controllers are locked and only "active" controllers are required to give input to the game.

Prior to any multiplayer sign-in screen, all of the controllers are able to navigate the menu structure. In one embodiment, all controllers access and navigate the same HUD. However, once users have accessed the multiplayer sign-in screen from within game, non-signed-in controllers are locked (inactive) unless a title supports join in progress. Pressing the HUD button on these controllers provides no input to the system.

Gaming titles that support join-in-progress are able to leave all controllers active, but will inform the system which controllers are actively being used. These titles respond to any input from the non-locked, but active controllers to support a join-in-progress sign-in experience. When there are multiple active controllers, pressing the HUD button will display the user-specific HUD for the user who pressed the HUD button.

In the case that a notification is already on screen for a specific user and that user presses the HUD button, instead of navigating to the main menu of the HUD, the user will be navigated to the correct space within the HUD to handle or respond to the notification.

In one non-limiting embodiment, while one player is in the HUD, all other controllers are locked and input ignored. If player 1 is in the HUD and a notification is displayed for player 2, player 2 is not able to respond to the notification until player 1 closes his/her HUD by pressing the HUD button again, or B/BACK from the HUD entry point screen.

All controllers can navigate the game menu, however pressing the HUD button will navigate the user to his/her specific HUD (even if not signed-in). Users are able to sign-in/out from anywhere at anytime, freeing the game from this requirement.

As mentioned, in one embodiment, while one user is accessing the HUD, all other controllers are inactive. If player 1 is in the HUD and a notification is displayed for player 2, player 2 will not be able to press the HUD button to respond to the notification until player 1 closes his/her HUD. If the notification is no longer onscreen when this happens, player 2 will have to go to his/her message center in order to read a received invite/request/message. In addition, games can specify which controllers are able to give input during gameplay. All non-required controllers can be locked. Input from a locked controller is ignored, including the HUD button press.

In one embodiment, pressing the HUD button from any bound controller (wireless or wired) of a currently turned-off console will power-on the console. This controller will be designated as the primary controller and the primary/default profile will be auto-signed-in and bound to this controller.

In one embodiment, pressing and holding the HUD button for 3 seconds while the console is already on will give the user a confirmation dialog asking if the user wants to turn-off the console. On confirmation, the console will be turned-off. In addition, the HUD button provides users access to multiple in-game shortcut buttons to system functionality.

In one embodiment of the invention, the user is able to access the HUD from within the Dashboard. This includes all system applications and hard drive based apps (e.g., DVD-playback, etc.). In the context of a game, calling any component of the HUD via API places the user in the actual HUD, leaving standard HUD button behavior intact. Because of this, the invention keeps track of which controller was responsible for instigating the game to call into the HUD.

Because a select couple system applications are expected to have a subset of functionality available in the HUD and a superset of functionality available in the Dashboard, the user could be placed in a situation where the first half of their current task is in the Dashboard and the second half of the task is in the HUD.

In this manner, the user will be starting their task in the HUD or walking through their task as they would do in-game. For example, selecting Friends or Marketplace will display the system application. However, selecting Download Trailers from the Games blade would hop straight into the Trailers download screen within marketplace (in the HUD).

The actual point of jumping between the Dashboard and the HUD will be clearly defined within the application specific specification. For example, the Games Blade specification will call out that selecting "Download Demos" will immediately display the marketplace within the HUD with the content filtered to downloadable demos. Similarly, selecting "Achievements" will display the achievements view in the HUD. Applications that this affects include Friends, Message Center, Recent Players, Marketplace, Device Selection, View Profile and Account creation. In one embodiment, the HUD takes advantage of 480p and 720p resolution when games are rendering in these modes.

For the few games that are expected to support 1080i, when the HUD is called up over the game, the game will have its resolution lowered to 1280x720. A small-overlay in the HUD will take up half of a 640x480 resolution display, however on a higher resolution display the HUD will take up significantly less space (320x480 displayed to fill vertical distance on a 1280x720 display leaves the HUD rendering at 480x720 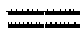 3/8 of the horizontal display vs 50%).

While the HUD is being rendered, the background (game or movie, etc.) will be darkened and blurred. Because of limited system resources, the background blur will not be a full Gaussian blur, but should be as close as possible.

Various parts of the HUD are broken down into separate applications to limit concurrent system resource usage. Applications are unloaded and loaded as needed. To avoid large seams while one application is being unloaded and the second loaded, the background blade of the HUD will be rendered via the UI thread outside the scope of the individual application. As an application transitions from small overlay mode to large overlay mode, the UI thread will be notified to transition to the large background blade (and large-to-small).

The application will not render its UI until the blade has successfully transitioned to its correct state. This will prevent buttons from being displayed directly on top of a game without the background blade. Once the blade is in position, the UI for the specific app will fade into view. Exemplary blades are illustrated in Fig. 3C.

In addition, the background blade will have the title bar and button legends. These are UI elements that exist on virtually every screen within the HUD and makes sense to be handled once by the logic that deals with the background blade.

To support the button legend in this manner, applications register appropriately localized strings for each of the 4 primary buttons, that differ from the standard button legend (A Select, B Back). The application is able to register new strings for the button legend at any point while the app is loaded; allowing the legend to be contextual based on what is highlighted within the scene. Applications will also register the appropriate title to be displayed in the title bar.

If desirable, each user is able to select a theme to be applied to both the Dashboard and the HUD. This theme will be used whenever the user accesses the HUD. If multiple profiles are signed in, each respective player will see his/her selected theme when accessing the HUD.

In one embodiment, the HUD theme (unlike the Dashboard theme) includes changes to the background blade. This will give users the ability to personalize their experience. Blade-only themes will each be a separate skin file containing only the background skin in small and large overlay modes with appropriate transitions.

A user can select a theme from the options menu of the HUD. If a user has selected a specific theme that is currently not loadable (not available or broken), the HUD will default to a Concertina theme that lives in flash ROM.

Having a concurrently running system experience affords the ability to provide users with a universal screensaver. This screensaver is user controlled and activated when no input is received by the system for X seconds; where X is the defined length of time as set by the user. If no profiles are signed-in, the default time for the screensaver will be 15 minutes. After 15 minutes of inactivity, the screensaver will be activated. In the case that multiple profiles are signed-in and each has a different screensaver delay time, the primary profile's time will be used.

Specific applications are able to call an XSetScreensaver() API to specify whether the screensaver should not be activated. Setting this to false will disable the screensaver for in-game FNWs/cutscenes, fullscreen music visualizers, slideshows and DVD-playback.

Games will re-activate the screensaver after deactivating it for a cutscene, etc. The default case is for the screensaver to be enabled. After 60 seconds of being disabled, the setting will revert to being enabled. To continue to suppress the screensaver, a title will have to continue to call the XSetScreensaver API. There is no limit on how many times this API can be called.

The screensaver is immediately dismissed after any system input is received. This includes input from all controllers, the DVD remote control, connected hardware devices and closing the DVD tray. This does not include input from audio based input (e.g. voice communicator, Cyclops microphone, karaoke microphone, etc.)

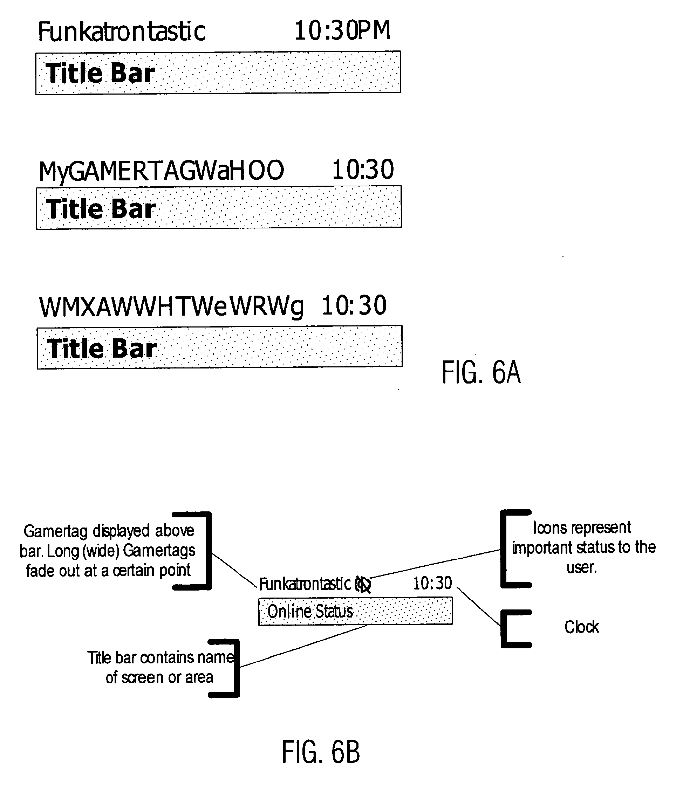

At the top of every screen, as illustrated in exemplary fashion in Figs. 6A and 6B, in the HUD will be a title bar containing the title area of the screen, the current profile's Gamertag and the current time. The Gamertag and time are displayed immediately above the title bar.

If time is not set, the user will not see the clock. When time is set in the system area or via a Live connection, a Time Set bit is set so the HUD will know to display the time. This bit is cleared whenever power is lost to the console. Time is displayed in the user selected format: 12-hour or 24-hour format. The 24-hour format does not append "AM" or "PM". Either format should be right-aligned with the right most edge of the title bar.

If no profile is signed in, "Not Logged On" will be displayed in place of a gamertag.

The button legend is displayed at the bottom of each screen and by default shows the four primary buttons of the controller or gamepad (A, B, X, Y). These buttons are displayed in the same formation as they appear on the gamepad.

Short text descriptors are displayed (aligned to the respective button) for the actions a user can take by pressing the respective gamepad button. A (and START) select the currently highlighted button on the screen. In the rare occasion where no button onscreen has focus (e.g. privacy statement), pressing A will result in a no-op sound. B (and BACK) map to back, returning the user to the previously viewed screen. If no screen was previously viewed (navigation stack is empty) the application manager of the system will send an event to the game that it now has focus and the user is returned to the game.

X and Y buttons are generally reserved for secondary functions or shortcuts only. When X and Y are used as shortcuts, in one embodiment, X should is used first for a destructive or constructive actions (e.g. new message or delete content). Y is used first for anything regarding options or settings.

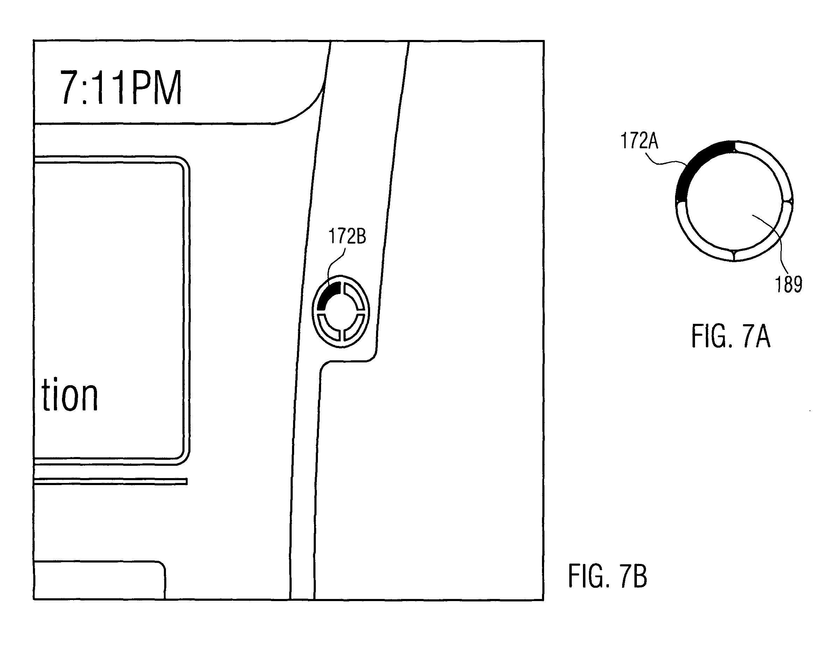

As shown in Figs. 7A and 7B, the right-most side of the HUD blade will contain an iconic representation of the HUD button, including the ring of light. The actual ring of light that surrounds the HUD button on every gamepad is made up of a light pipe with 4 quarantined bi-color LEDs, each capable of lighting green, orange or red. The software representation of the ring of light will mimic the actual LEDs as they are lit on the controller of the user currently navigating the HUD. Thus, LED 172A on controller button 189 of Fig. 7A is mimicked by LED 172B of the ring of light on the blade in Fig. 7B.

For example, if the user has received a game invite but has missed the notification, his/her respective quadrant (player 1-4 mapped to quadrant 1-4) will slowly pulse orange.

If the user accesses the HUD via the Media Remote control, it will be as though the primary profile were accessing the HUD. In the case that no profile has been signed in or a primary profile has been auto-signed in but not yet bound to a controller, the ring of lights will slowly blink each quadrant in clockwise order starting with virtual port 1 (top-left quadrant).

Though the HUD is designed to completely fit on one screen, the HUD is also designed to be extensible in the future. Individual components should be able to be easily added or removed. In the case that more items are required on the HUD main menu than can be displayed, the HUD will become scrollable and appropriate scroll arrows will be displayed in the bottom-right corner of the HUD (immediately below the last viewable item).

As with all lists, left-trigger and right-trigger will page-up/down, respectively. At anytime, pressing the HUD button and another specific controller button will provide the user quick shortcut access to the following functionality:

| Button Combos | Action | Visual Feedback |
|---|---|---|
| HUD Button + A | Toggle Voicechat channel (game←→1:1) | Either a game channel chat or Voicechat channel chat icon is displayed in the designated notification location (if no 1:1 t toggle to, the game channel ico is displayed everytime) |
| HUD Button + B | Mute/Un-Mute (me) | A mute/un-mute icon display in the designated notification location |
| HUD Button + X | Voicechat volume down | Volume bar displayed in the designated notification location with a HUD button icon representing who is controlling the volume |
| HUD Button + Y designated | Voicechat volume up | Volume bar displayed in the notification location with a HUD button icon representing who is controlling the volume |
| HUD Button | After holding for 3 seconds, the use is asked if he/she wants to turn-off the console | Message dialog |
| Hold HUD Button + Left Trigger | If custom music is playing, jumps | A music note icon with an arrow pointing to the left is displayed to PREV song the designated notification location |
| HUD Button + Right Trigger | If custom music is playing, skips to NEXT song | A music note icon with an arrow pointing to the right is displayed |
| | | in the designated notification location |

Once a button combo has been entered, letting go of the HUD button will not toggle the HUD as it normally would. Both the HUD button press and the other button press are consumed and not passed to the game.

When a user is running in backwards-compatible mode (playing a previous game console system) and presses the HUD button, the user will see a HUD with limited functionality and a message explaining why the functionality is missing. From this limited HUD, the user will be able to turn-off the console or exit the game to access the Dashboard. Pressing B or the HUD button will dismiss the HUD and return the user to the backwards-compatible game.

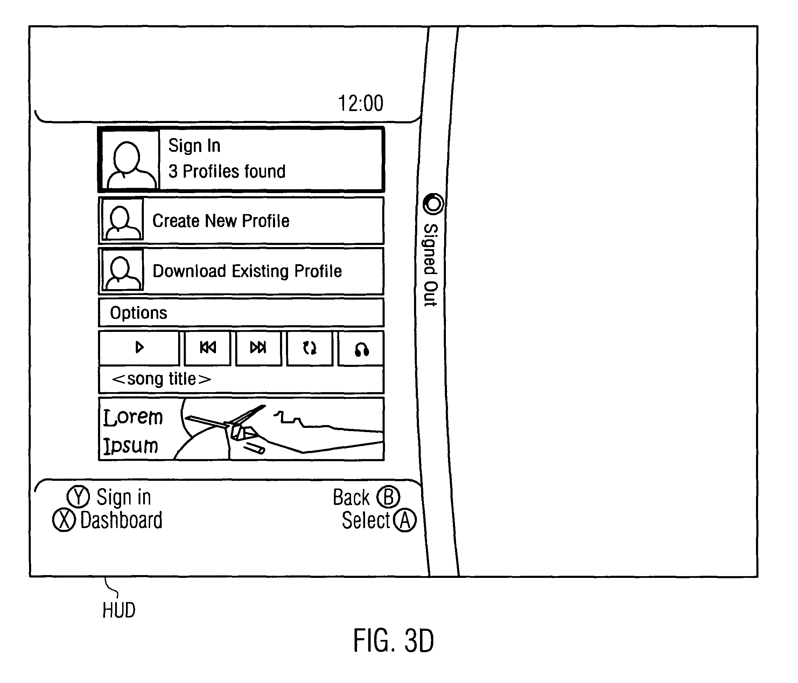

Whenever the user accesses the main menu of the HUD, but no profile is currently signed in, the user will see the signed-out HUD main menu. From this main menu, the user will have access to the necessary non-profile specific options, the mini-media player, the option to exit to dashboard and, of course, the ability to create a new profile, sign-in with an existing profile or download a profile, as illustrated in exemplary fashion in the HUD of Fig. 3D

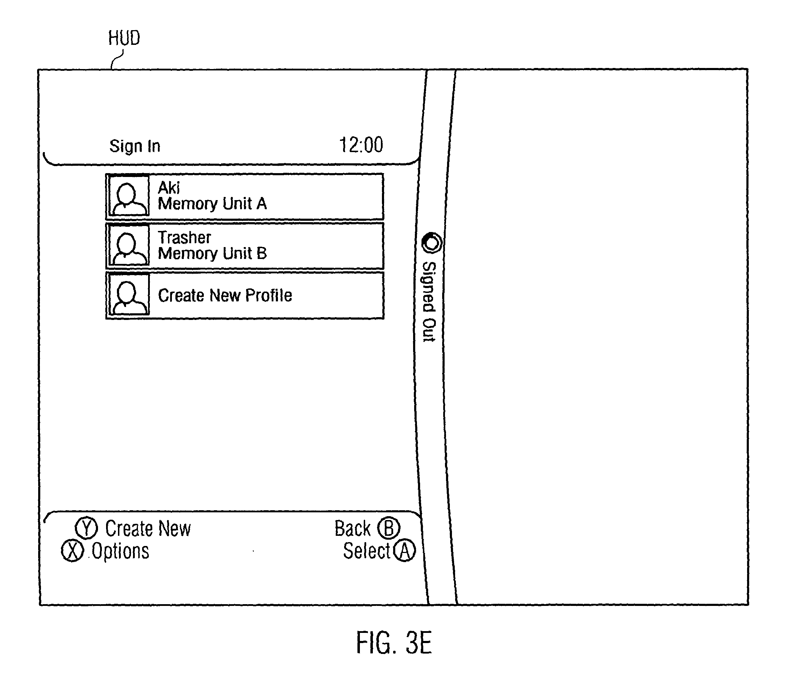

Pressing the Y button or selecting logon from the main menu will navigate the user to the 1-player sign-in screen. On this screen, as illustrated in exemplary fashion in the HUD of Fig. 3E, the user will see a list of available profiles (with Gamertag, gamertile, save location, Live membership and total time played) as well as the options to create a new profile or recover an existing profile. Live enabled profiles will show some special marking, etc. to indicate the profile's status.

Selecting Create Profile (new profile) will navigate the user to the profile creation flow which will give the user the ability to create a profile and sign-up for a Live membership. At minimum, the user will select a Gamertag and a gamertile. Once a new account has been created, the newly created account will be signed in and the user will return to the signed-in version of the HUD main menu.

If the user selects to create an Xbox Live membership while he/she is creating a profile, he/she will be told that he/she will need to exit the current game in order to create the Live membership. On confirmation, the game will be unloaded and the user navigated to the full profile creation flow within the Dashboard. As with all of the "exit to Dash" scenarios, if the user is already in the Dashboard, no confirmation dialog will be displayed.

Once a profile is signed-in, the main menu of the HUD will give the user access to all per-profile settings accessible via the HUD. The top-most panel (excluding the title bar) will be the user's mini-gamercard. On this gamercard, the user will see hisllier Gamertile and game credential. An online user will see his/her Gamertile, credential and online status (online, away, busy, appear offline, offline). Selecting the gamercard will navigate the user to his/her profile view.

In accordance with an exemplary non-limiting HUD format in accordance with the invention, immediately beneath the mini-gamercard is the community panel. This panel shows the user summary data relating to his/her community and gives the user access to message center, friends and recent players. Games might have the ability to extend this community panel by one additional game specific button. Selecting this button would dismiss the user and navigate the user to a community specific screen within the game.

Following the community panel will be the Voicechat button which not only gives the user access to the full Voicechat area, but shows the user their current Voicechat status.

Next is the mini-media player. This gives the user basic control over the background music being played. The user can toggle between the in-game soundtrack and a user created playlist. Pressing down from the Voicechat panel will navigate the user's focus to the PLAY button on the mini-media player. However, horizontal focus is preserved after the user presses LEFT or RIGHT and then away from the mini-media player. For example, pressing LEFT will place focus on the PREV song button, then pressing UP will navigate to the Voicechat button and pressing DOWN should return focus to the PREV song button (not the PLAY button).

Beneath the mini-media player will be the Options menu button. This area gives the user access to all per-profile settings that can be accessed via the HUD. These settings include things like controller rumble level, voice chat volume, online presence, etc.

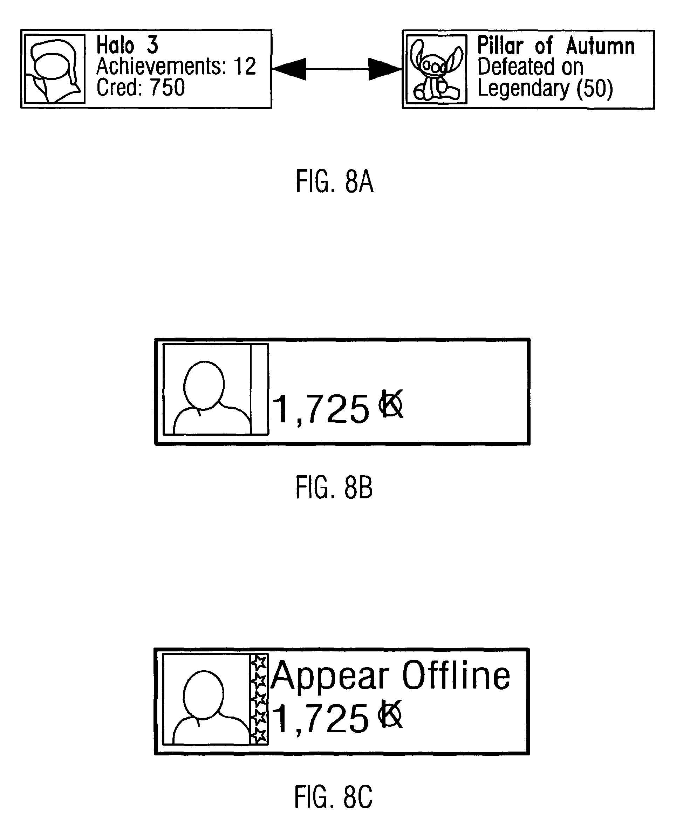

Another button on the HUD main menu as illustrated in exemplary fashion in Fig. 8A is an optional menu button that is only displayed when a game is being played or is in the DVD-ROM and will change based on the level of integration the game chooses to implement. At a bare minimum, the Game Spotlight button will display the following for a running game or DVD-ROM: Game logo, achievement(s) earned and credential earned.

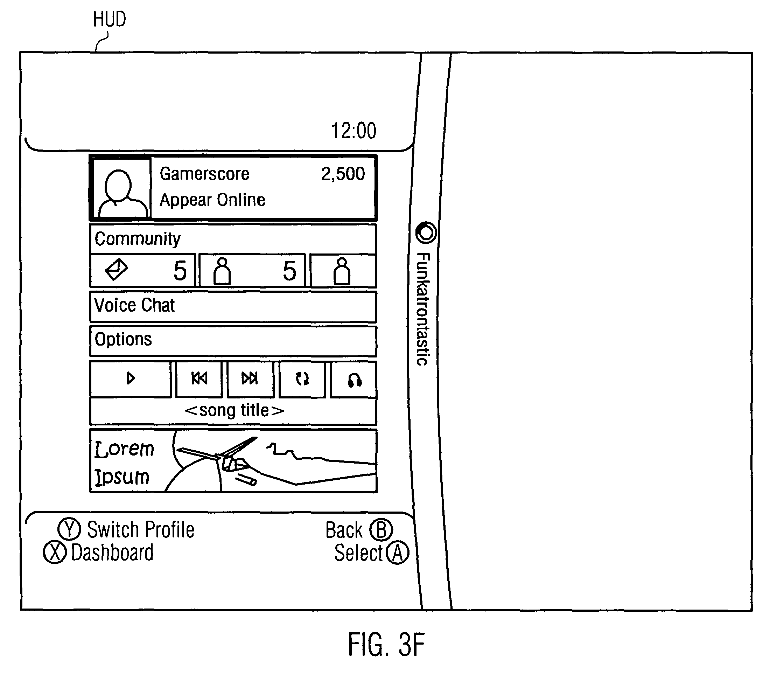

If a game supports downloadable content and the user is currently connected to Xbox Live, this game spotlight will display marketplace as an option. Lastly, a title will have this ability to provide an image and text to be display on this game spotlight button, as shown in exemplary fashion in the HUD of Fig. 3F. Titles will be encouraged to display interesting stats about the current session (e.g., time remaining, score, etc.). Selecting this button will return focus to the game where the title will be able to display custom UI.

The user is able to view into his/her gamer profile from the top-level HUD. In addition to seeing his/her gamertag in the title bar of the HUD, the user will see his/her gamertile, total number of credentials and online status (if a Live user). For instance, Fig. 8B illustrates an exemplary non-Live-enabled profile view of mini-gamercard from HUD main menu and Fig. 8C illustrates a Live-enabled profile view of mini-gamercard from the HUD main menu.

Selecting the mini-gamercard will navigate the user to the user's profile screen. On this screen, the user sees his/her full gamercard along with various options to modify profile preferences/settings, to view profile achievements or to manage the profile. Selecting to manage the profile will exit the current game (using standard confirmation dialog) and navigate the user to the account management area within the Dashboard.

In one embodiment, a community panel is displayed on the main menu of the HUD at all times. This panel gives the user access to his/her message center, friends list and recent players list. While the community panel does not contain focus, the top line will display "Community". When an individual button within the community panel has focus, the top line will display the respective area's descriptor: Message Center, Friends, Recent Players.

In various non-limiting embodiments, default focus, on initial navigate to the community panel is on the far left-most button. Horizontal focus is preserved, however, once the user navigates away from the community panel (returning to the community panel will place focus on the previously highlighted community button).

Pressing A on a specific community panel button will navigate the user to the respective tab within the community area. Once in the community area, the user can press RIGHT from the Message Center tab to view the Friends tab, LEFT from the Friends tab to view the Message Center tab, RIGHT from the Friends tab to view the Recent Players tab and LEFT from the Recent Players tab to view the Friends tab. The end tabs do not wrap. In one embodiment, on entry to the community area, the UI thread will begin rendering the large overlay HUD blade as the background to the community app.

On the community panel, each community area is represented with an appropriate icon. Next to the icon will be a number, indicating interesting summary data for the respective area.
- Message Center - number of new/unread messages
- Friends - number of friends online
- Recent Players - number of recent players online

This number is displayed left-aligned on the right side of the icon, keeping the space between the icon and the greatest digit static. The icon/number pairs are center-aligned on each respective button. When the number is 0 for any of the community areas, no number is displayed on the community panel. If necessary, the community button icon is shifted (center-aligned) to avoid an unnatural off-balance based on no number being displayed. The buttons are designed to support displaying the full (max) values for each of the community areas.

If a profile does not have a Live membership, the community buttons are disabled in appearance. If selected, the user will be presented with an introduction to Live. If a user has a Live membership but is not signed in to Live, selecting a Live required feature will display a dialog asking the user if he/she wants to sign-in to Live. Selecting 'yes' will attempt to sign the profile in to Live.

Post-launch, additional tabs will be added to the community area. These tabs will likely include social groups and most likely MSN Messenger contacts (although thought has gone into integrating this with friends). As these additional tabs are added, the community panel will be extended to allow for scrolling in additional community tabs.

Selecting any of the community panel buttons or the Voicechat button will navigate the user to a large overlay Xbox Live up sell message. This message will contain graphics and will inform the user that an Xbox Live membership is required to access the selected feature. This screen will also show the user some key features of the Live service and give the user access to adding an Xbox Live membership to their profile. Selecting to get Live will ask the user if he/she wants to exit any currently running application. On confirmation, the user will be navigated to the membership area of account management in the Dashboard. If the user is already in the Dashboard, selecting to create a Live membership will skip the exit confirmation dialog and navigate the user directly to Live membership creation.

In the case that the user does not have a Live membership, the user will be immediately navigated to the Live Up Sell screen. If the user has a Live membership associated with his/her profile, the user will be asked if he/she wants to sign-in to Xbox Live. Selecting to sign-in to Xbox Live will sign-in the current profile.

In various non-limiting embodiments, the HUD of the invention will allow users on a box to participate in multiple different chat sessions. The user is able to switch between these chat sessions via the Voicechat menu. All non-game chat channels are one-on-one voicechats. Users are not able to start a Voicechat with a non-friend. Selecting to join a 1:1 Voicechat will temporarily remove the user from any in-game chat. However the user can quickly return to the in-game voice channel by selecting the game channel from the top of the Voicechat menu or using the button shortcut to toggle Voicechat.

Key Voicechat scenarios will include: Invite to Voicechat, Accept Voicechat invite, Decline Voicechat invite, Toggle from Voicechat to game, Cancel sent Voicechat invite, Receive multiple invites, Accept a second Voicechat invite and Exit a Voicechat.

The Voicechat panel on the main menu of the HUD displays the user's current chat status and provides access to the Voicechat area of the HUD. If the user is not in a Voicechat (mainly, the user is in the game channel), no status will be displayed on this panel.

Once in a Voicechat, the Voicechat panel on the HUD will display, e.g., "Voicechat: Thrasher" where 'Thrasher' is the gamertag of the other gamer in the Voicechat. Next to the gamertag will be a small voice communicator icon that flashes whenever the user on the other end is talking. A threshold and delay are set for when the icon should stop being lit. The icon should be lit while the other person is speaking and not lit while they are not. The icon should not flash sporadically as the person speaks individual words.

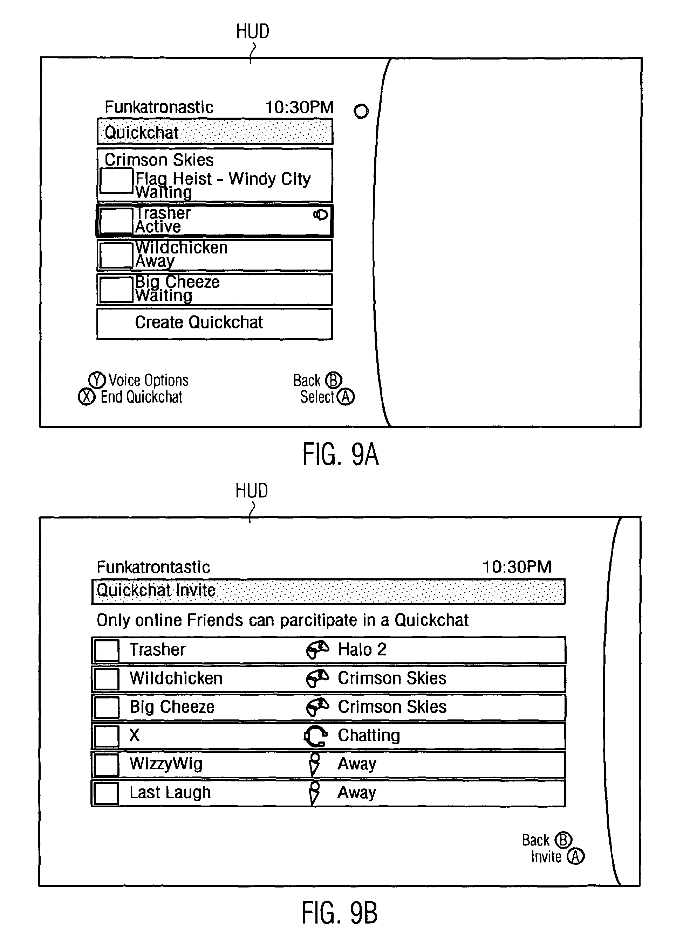

Selecting Voicechat from the HUD main menu will bring up the Voicechat menu, as shown in exemplary fashion in the HUD of Fig. 9A. This side-panel (small overlay) displays the available chat channels for the player with appropriate details. At the top of the list of chat opportunities will be the in-game chat channel (if applicable). Immediately below this entry will be the list of all current channels (in-coming/out-going chat requests, previous opened but not closed channels, etc.) and a button that allows the user to start a Voicechat (Create Voicechat). Existing chat channels are listed by most recently added (recent to oldest).

If the user is already in a chat, either in-game or 1:1, the currently selected chat session will be marked with a voice communicator icon. This icon will be changed to a muted voice communicator if the user has muted his/her microphone through the headset & voice options under the options menu. This icon represents the user's current voicechat state and not the state of the other party.

The gamertag, gamertile and current chat status will be displayed for each of the voice channels. In the case, that the gamertag is too long to fit on the panel, it will fade as it nears the right-most edge of the panel.

The chat channel status can be one of the following: (a) Active - You are both currently in the channel, (b) Waiting - the other party is waiting in the channel to talk with you, (c) Away - the other party is away from the channel, pressing A will join the channel. Pressing A again will send a callback to the other player informing him/her that you are waiting, (d) Invite Sent - you've sent this person a chat request but he/she has yet to accept/decline it, pressing A on this channel will simply set your chat selector to this channel or (e) Invite Received - you've received a chat invite from this player, pressing A will join the channel, pressing X will remove the channel.

To start a Voicechat, the user can either select Create Voicechat from the Voicechat menu or select Start Voicechat from the contextual gamer options menu within the community area. In the case, that the user selects Create Voicechat from the Voicechat menu, as shown in exemplary fashion in Fig. 9B, the user will see a large-overlay HUD screen listing only friends that are currently online (includes Away status) and who are not already in a Voicechat with the current user (in a chat or has sent/received an invite). This list will show (from left to right) the gamertile, gamertag, presence icon and presence for each online friend. Friends are sorted alphabetically.

After selecting to invite someone to a Voicechat (from the invite screen), the user will be navigated back to the Voicechat menu with focus on the newly added chat channel. The chat presence line will show "Sending invite..." with the "..." animating to show work. Once the request has been successfully sent, the text will change to "Invite sent".

Pressing the Y button while on the Voicechat screen will navigate the user to the voicechat options screen within the options area. Once done modifying voicechat options, pressing B will return the user to the Voicechat screen with focus preserved.

If a Voicechat channel has been opened between two friends and the other friend is away from the channel, pressing A on the channel while the user is user is already in the channel, will "callback" the friend. Selecting to callback the other player will flash a notification and play a sound on the other player's screen. If the other player presses the HUD button while the callback is up, he/she will be immediately dropped back into the Voicechat with the friend sending the callback.

The A button is inactive on an active chat channel (both parties are in the chat). The A button sends a callback to the other party, if the other party is not in the channel with the user. Otherwise, the A button will select to join a specific channel. Pressing A on the gamer channel, will return the user's voice to the game.

Voicechats are only cleaned-up when the user signs-out of Live, the friend's presence changes to offline, or either user presses X to quit the chat. In all cases, users that were actively in the chat will immediately be returned to the game channel.

To prevent (or limit) users from cheating during ranked games or tournaments, games will be able to call an API with a Boolean parameter to designate whether Voicechats are allowed. If a game has turned off the Voicechat feature and the user selects Voicechat from the HUD main menu, the user will see an OK message dialog that says "The Voicechat feature has been turned off by the current game." Selecting OK will close the dialog and leave the user on the HUD main menu.

Pressing the HUD button while a Voicechat invite notification is onscreen will navigate the user to the invite message (within the message center). Pressing the HUD button while a Voicechat callback is onscreen will automatically place the user in the Voicechat channel.

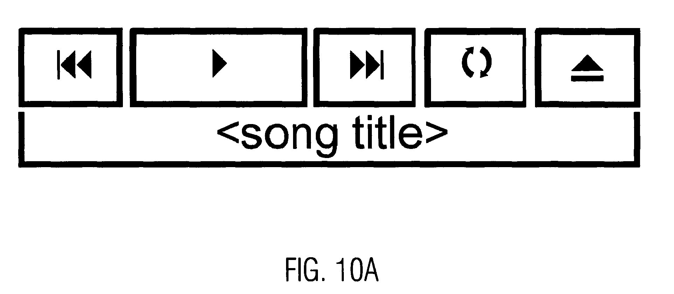

The mini-media player, the UI of which is illustrated in exemplary fashion in Fig. 10A, gives the user the ability to start playing a custom playlist. In the case that a game is playing, the user selected playlist will play instead of the background game "soundtrack". The user is able to switch between the game soundtrack and a custom user-created playlist at anytime and as frequently as he/she wants.

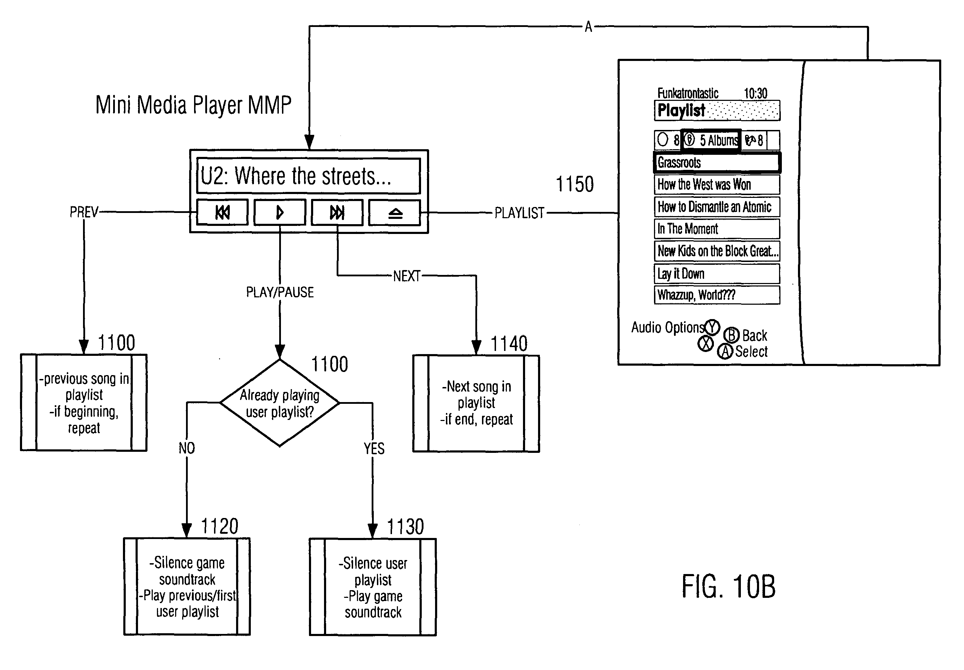

The mini-media player panel gives the user a quick view of what song is currently being played, a playlist button which navigates the user to the small-overlay playlist selector and basic transport controls: play/stop, previous song and next song, as illustrated in Fig. 10B. Pressing the back button at 1100 goes to a previous song as does pressing the forward button at 1140 goes to the next song. If the play button is pressed, a determination is made at 1110 whether or not a playlist is being played. If not, at 1120, the game soundtrack is silenced, and a previous playlist is engaged. If so, at 1130, the user playlist is silenced, and the game soundtrack is played at 1140. If the user presses the playlist selector at 1150, a playlist selection UI is invoked.

Thus, for example, prior to selecting PLAY or the playlist button, the mini-media player will display the last song listened to. Pressing PLAY will begin playing this song. Pressing PREV/NEXT will take appropriate action and display the new song (previous or next, respectively). If the user simply selects PLAY without first selecting a playlist from the playlist screen, the mini-media player will begin playing the last listened to playlist, starting on the last listened to song. If the user has never listened to a song before, the mini-media player will begin playing the first playlist (as determined by the media team).

If no playlist is available, selecting any of the mini-media player controls will display a message dialog with the option to go to the media area within the Dashboard. This message dialog will be a confirmation message dialog if the user is currently in a game. If the user is in the Dashboard, the dialog will simply ask if the user wants to go to the media area.

While on the HUD main menu, LEFT/RIGHT SHOULDER buttons map to previous/next song, respectively. Advanced users are able to press and hold the HUD button, while in-game, and LEFT/RIGHT SHOULDER buttons to perform the same functionality without navigating to the HUD.

One user selected playlist will be played at a time. If one player starts a song and closes the HUD, a second player can access his/her HUD and will see what song is being played (as selected by the first player). The second player can then choose to change the song/playlist in the same way that he first player is able to.

In one embodiment, the volume of the HUD media player will be set by the first user who selects to play a custom playlist. Other users are able to change the music playback volume, but individual profiles will only receive an updated volume level if they are the ones to change the volume.

On navigating down from the HUD main menu, by default, focus is on the PLAY button within the mini-media player. Once the user has navigated left to right on the mini-media player, horizontal focus will be preserved until the HUD is closed. On next entry to the HUD, default focus on the mini-media player will be the PLAY button again.

If the user is listening to a playlist off a connected device and that device is removed, the mini-media player will stop playing and the in-game soundtrack will be made audible. If a user connects an audio device and is not already listening to a custom soundtrack, the first playlist found on the connected device will begin playing. The last played playlist off a connected audio device will be stored with the user profile so that the default playlist on a device can be selected when the device is detected. For example, connecting an mp3 player will begin playing the playlist that was listened to last on the mp3 device. If the playlist is no longer available, the mini-media player will begin playing the first playlist enumerated off the device.

If the user is relying on the HUD mini-media player while in the Dashboard, the user will have the ability to change the current song or selected playlist from both the HUD and from the music player within the Dashboard. Making a change from either of these interfaces will immediately update the other. For example, selecting PLAY from the HUD and then STOP from the Dashboard will stop the media player. Selecting PLAY from one interface and then NEXT on the other interface will reflect the new song playing in the first interface. The two UIs for changing songs are simply interfaces into the same media player.

The options menu is displayed when a user selects "options" from the main menu of the HUD. This menu is a small overlay screen with a simple listbox displaying the available options areas. Most available options are per user, however some options, such as music volume, will affect all users on the box.

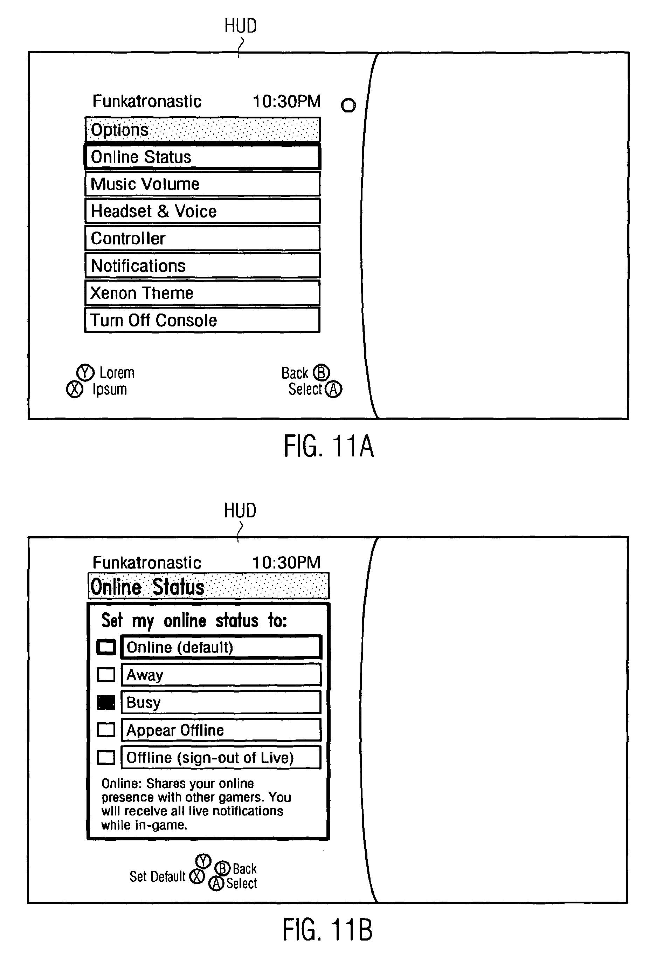

If no profile is logged on, a few of the available options will be disabled (but still shown for user education and consistency). Exemplary options are shown in Fig. 11 A.

In one embodiment, the options that will be displayed if a user is signed-in with a profile include: (a) Online status: change your status to busy, away, appear offline, etc., (b) Music Volume: change the volume of user selected music, (c) Headset & Voice: select whether voice chat goes through TV or headset, voice chat volume and an option to mute yourself The user will also go here to bind a wireless headset to the user's controller, (d) Controller: change rumble level and brightness level of LEDs, see battery and wireless signal strength for wireless controllers, select a virtual port (show which profile is signed in to which port), (e) Notifications: ability to control visual style, audio options, display time for notifications, (f) Theme: select a custom theme for both the Dashboard and HUD and (g) Turn Off: select to turn-off the console. The user will be shown a confirmation message with the shortcut hint on turning of the console from anywhere by holding down the HUD button.

In one embodiment, if the profile signed-in does not have a Live membership, the Online Status option menu will be disabled. If no profile is signed-in, the options menu will be made available. Changes to the options menu will be preserved across boot. Creating a profile will set the profile's options to what the user has already selected in the options menu.

The online status sub-menu gives the user the ability to change his/her online status and to change the default online status for his/her profile, as illustrated in Fig. 11B. The HUD of Fig. 11B is comprised of a list of online status options, with a small meta-panel at the bottom. The list of options are part of a radial group. The user's focus is made clear based on the highlight of the option button. However, the radial button (checkbox) is only marked for the current online state. Pressing A on any of the status options will change the online status to the currently highlighted option.

If the user is currently not signed in to Live but has a Live membership and selects online status, he/she will be navigated to the online status screen with the selected status set to 'offline'. In this case, as the user highlights various signed-in status lines, the user will see '(Sign-in to Live)' appended to the status option. For example, highlighting 'busy' will now show 'busy (sign-in to Live)'. Similarly, if the user is not currently offline, '(sign-out of Live)' will be appended to the offline state option, otherwise the user is already offline and the offline state option will simply show 'offline'.

In one embodiment of the invention, once an online state is selected, the actual API call will be made with the user selected online status. This selected state is not sticky (not preserved across sign-in) unless the user presses the X button (Set as Default) to set a specific sign-in state as the default. Selecting to set a sign-in state as default will store the correct state in the user's profile and will immediately set the user's presence to the newly set state.

For example, highlighting the 'offline' options and pressing the X button allows the user to logon with his/her profile without automatically being signed-in to Xbox Live. Similarly, a user can specify to always sign-in to Live in the 'appear offline' state. This allows the user to set a sticky presence, while being able to easily and temporarily also change his/her presence state.

If no controller input is received for a given controller for more than 5 minutes and the game has not called any specific trumping APIs that and the user is not currently watching a slideshow, a fullscreen visualizer or a DVD, the user's online status will be changed to Away. This will not change the user's default online status and will immediately change back to what the user previously had set for online status with any input from the respective controller. The UI for this screen depicts the currently selected online state as well as the default online state. By default, the default online state is 'online'. Pressing X on an online state that is already the default online state will re-set the same state as the default. Pressing X on a different state, will update the UI to show the default state, accordingly.

The user's focus remains on this screen until the user presses B or HUD button. The user is not automatically navigated back to the Options menu after selecting a new online state.

The controller settings screen gives the user the ability to change the rumble and LED brightness levels for his/her specific controller and select a different virtual port. These controller settings are per user and persist beyond the current game session as part of the user's profile settings. For a new profile, all controller settings will default to the designated default options.

If the user is using a wireless controller, the controller signal and battery strength will be displayed on this screen. Signal strength will be displayed visually with a 4 bar icon that fills in the better the signal strength. The battery icon has 5 segments depicting battery life. As the battery life drops, the icon changes colors, showing red when battery life reaches 20%. When battery life drops to 5%, the battery icon will begin to blink.

Available options on this screen include:
- Rumble level level (OFF, LOW, NORMAL (default), HIGH)
- LED Brightness level (OFF, LOW, NORMAL (default), HIGH)
- Virtual port (1-4, default current virtual port)

The rumble level option affects the multiplier for the rumble output from games/apps/etc., e.g., [OFF] [1] [2] [3] [4 (default)] [5] [6] [7]. The rumble level provides a multiplier that is applied to the rumble output before being sent to the controller. Multiplier values are assigned to each rumble level.

This value is stored with the user profile and is only applied to the respective profile's controller. In the case that the user is in the Dashboard or on a main menu of the game where all controllers are active but only one profile is signed-in, all rumble values output will use the signed-in profile's rumble level multiplier.

The LED brightness option affects the multiplier for the brightness of the LEDs on the ring of lights for the respective profile's controller. Decreasing the brightness level will decrease the intensity of the actual LEDs on the controller of the profile currently changing the setting, e.g., [OFF] [LOW] [NORMAL] [HIGH]. The default LED brightness level is NORMAL. When a signal is sent to a controller to run an LED pattem, the system will also send the LED brightness level and the controller will handle increasing or decreasing the intensity of the LED. Music settings include allowing the user to change the custom music playback volume.

Changing the music volume will make the change in the profile settings for the current profile. If another user accesses the HUD he/she will see the newly updated volume, however his/her profile settings will still show his/her previously set volume. Only after he/she changes the volume in the options menu will a new volume value be set as part of his/her profile settings.

The voice chat settings can be accessed from within the Voicechat area or directly through the Options menu from the HUD, enabling the user to select from the following four options: Voice output (TV, headset, both), Voice chat volume control, an option for the user to mute him or herself and the ability to bind a wireless headset to the controller.

Selecting to mute the user will immediately mute the user's microphone. A person who has muted him/herself in software will see an appropriate voice muted icon on the title bar of the HUD on every screen. Although this mute does not mute other individual user microphones, this would mute any communal omni-directional microphones. Voice output has three options: Voice through headset (default), Voice through TV and Voice through both. As volume is increased/decreased a standard sound effect will be played over and over again to allow the user to adjust the volume correctly. This sound effect will be played in the headset, on the television or through both depending on the voice output setting.

Lastly, the user can bind a wireless headset to the user's controller. The following flow is not complete, but gives an example of what we can ultimately do to help the user bind the wireless headset correctly. We need to take into account the scenarios where multiple people are binding multiple headsets (e.g. LAN party) to multiple consoles. In addition, in one embodiment, while the user is on this screen, the wireless headset associated with the user will have an LED that slowly blinks to allow a user to help locate his/her correct wireless headset.

With respect to notification settings, accessing the notifications menu will give the user the ability to change how notifications get displayed by the system. The user can control the visual and audible styles of the notification. As the user changes individual options for the notification, a sample notification will be displayed on the small-overlay HUD panel with the newly applied settings. Selecting to change the audio style of a notification will immediately play the newly selected audio style.

With respect to themes, the Theme sub-menu of the options menu will allow the user to select a system theme (Dashboard skin with HUD background blade skin). Generally, the user will see a small thumbnail image showing the currently highlight theme (with HUD over Dash in thumbnail). Pressing A on the theme will immediately apply the theme. Themes are listed alphabetically and are enumerated off all connected memory devices. Themes are stored in one specific folder on each device.

In addition to being able to set a system theme, the user will be able to select "download themes" to be navigated to the marketplace with content filtered to system themes. Once finished download themes (and the users presses B), the user will return to the Theme menu with preserved focus. The newly downloaded theme thumbnail will appear in the preview window.

As mentioned, selecting Turn Off Console from the options menu of the HUD will display a confirmation message asking if the user indeed wishes to shut the system down. On confirmation, the system will be shut-down. No notification is passed to the game. The game will not be given the opportunity to save progress.

As mentioned above, near the bottom of the HUD main menu will be a space where games can display in-game specific information or game/publisher branding. Selecting this button can do one of three things: return control to the game (allowing the game to create its own little place in the HUD), navigate the user to the marketplace area for the specific game or display all game achievements for the specific game.

Pressing X from the main menu of the HUD will display a confirmation message asking if the user wants to exit the current game in order to access the Dashboard Home blade. On confirmation, the system will unload the game and launch the Dashboard. If the user is already in the Dashboard, pressing X in this context will dump the navigation stack and place the user on the Home blade of the Dashboard (default focus).

On exit from the game, the HUD will be closed, users other than the one selecting to exit the game will be signed out and custom playlist music will stop. If the user is in a Voicechat, the Voicechat will be maintained. Selecting logoff will immediately log the current profile out and once logged off, the user's focus will be on the default button on the signed-out HUD main menu.

Other optional functionality that may be added by developer extension include:
- Additional Verbs - The ability to add a small number N verbs to the contextual gamer options menu that, when pressed, calls a callback to the game to allow the game to respond accordingly.
- Community Panel Shortcut Button - A button that sits to the left of the Message Center button on the main menu of the HUD. Selecting this button dismisses the HUD and gives focus to the title.
- Additional Tabs - The ability to add one or two tabs to the community area, populated with a game-provided list of IDs that, when selected, function similar to above.
- Game Spotlight - A banner/button on the main menu of the HUD that displays content provided by the title. This button can be used to navigate the user back into the game (allowing the game to pop-up a specific UI), to marketplace or to the achievements view for the specific title.
- Improved Game Spotlight - The above banner with the ability to have up to three buttons, that function similarly to the community panel buttons and navigate the user to a game-populated community-like tab UI, to the respective tab. The game would then populate the tabs using the above (Additional Tabs) model.

Games will be required to display appropriate message strings for various system/service errors as well as specific console functionality messages (e.g. do not turn-off console while saving, etc.).

All HUD rendered error messages will be vertically and horizontally centered onscreen. The game may still have requirements for how the game handles the error even if the HUD is rendering the message. For example, on a controller disconnect, the game will be required to pause the game (in a single player experience) even if the HUD is displaying the controller disconnect error. In the case of two controllers disconnected, the HUD will only display the first controller disconnect error until it is resolved, at which point, the HUD will display the second controller disconnect error. Splitscreen multiplayer games are encouraged to provide a better user experience by displaying the error message within the respective quadrant of the screen and not to interfere with other players on the box.

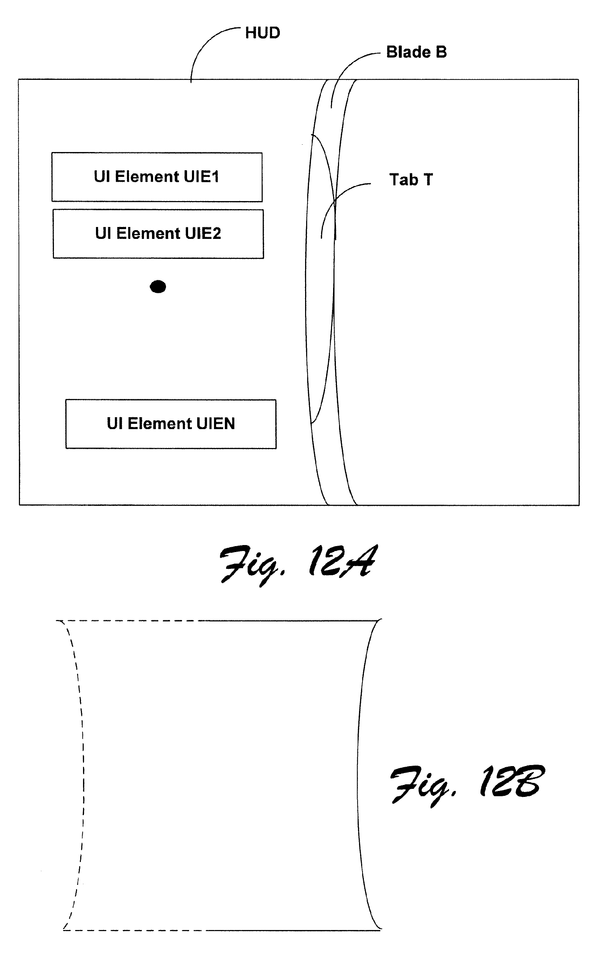

Generically represented, thus, the HUD overlay of the invention is illustrated in Fig. 12A. Various system level UI functionality is presented via UI elements UIE1 to UIEN. While a subset of may be set by the underlying application itself, most of the functionality represented pertains to system level functionality, such as messaging, voicechat, settings, playing music, etc. Of note is the shape of the blade B and the corresponding tab T with room for text to describe the blade. Also, as depicted in Fig. 128, windows in accordance with the invention take on a curved shape on the side, while remaining linear on the top and bottom, representing a rudimentary form of "X."

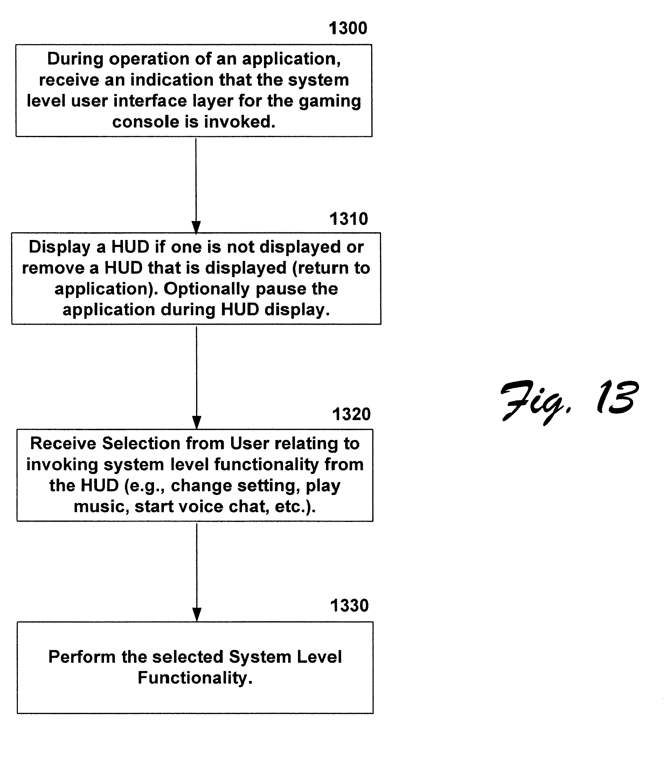

Fig. 13 is a flow diagram illustrative of invoking and deconstructing the HUD in accordance with the invention. At 1300, during operation of an application by a multimedia console, an indication is received (e.g., via a peripheral button or remote control) that the system level user interface layer for the gaming console is invoked. At 1310, a HUD is displayed if one is not already displayed, or the HUD is removed if it is already displayed (i.e., return to the application). The application can be optionally paused during HUD display. At 1320, a user may select various user interface elements relating to invoking system level functionality from the HUD (e.g., change setting, play music, start voice chat, etc.) and at 1330, the selected system level functionality is carried out.

### Exemplary Computing and Network Environment

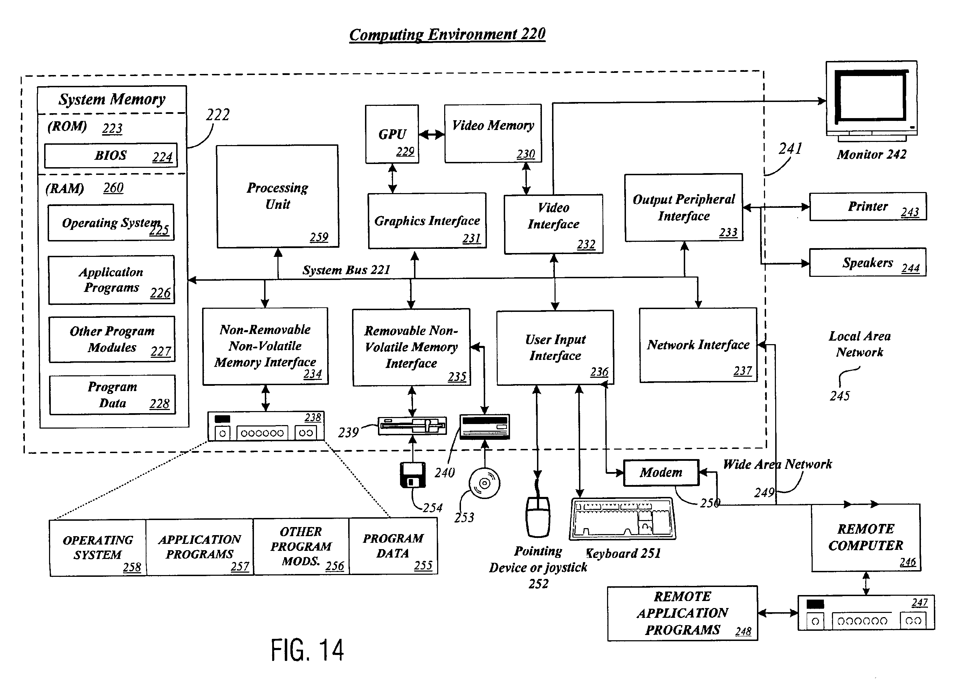

Although the system level user interface system has been described thus far as it is applicable to a multimedia console, the user interface system may run and also be used on other computing systems such as the exemplary computing and network environment described below. Referring to Fig. 14, shown is a block diagram representing an exemplary computing device suitable for use in conjunction with various aspects of the invention. For example, the computer executable instructions that carry out the processes and methods for providing the system level user interface as described above may reside and/or be executed in such a computing environment as shown in Fig. 14. The computing system environment 220 is only one example of a suitable computing environment and is not intended to suggest any limitation as to the scope of use or functionality of the invention. Neither should the computing environment 220 be interpreted as having any dependency or requirement relating to any one or combination of components illustrated in the exemplary operating environment 220.

Aspects of the invention are operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

Aspects of the invention may be implemented in the general context of computer-executable instructions, such as program modules, being executed by a computer. Generally, program modules include routines, programs, objects, components, data structures, etc. that perform particular tasks or implement particular abstract data types. Aspects of the invention may also be practiced in distributed computing environments where tasks are performed by remote processing devices that are linked through a communications network. In a distributed computing environment, program modules may be located in both local and remote computer storage media including memory storage devices.

An exemplary system for implementing aspects of the invention includes a general purpose computing device in the form of a computer 241. Components of computer 241 may include, but are not limited to, a processing unit 259, a system memory 222, and a system bus 221 that couples various system components including the system memory to the processing unit 259. The system bus 221 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 241 typically includes a variety of computer readable media. Computer readable media can be any available media that can be accessed by computer 241 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 241. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 222 includes computer storage media in the form of volatile and/or nonvolatile memory such as read only memory (ROM) 223 and random access memory (RAM) 260. A basic input/output system 224 (BIOS), containing the basic routines that help to transfer information between elements within computer 241, such as during start-up, is typically stored in ROM 223. RAM 260 typically contains data and/or program modules that are immediately accessible to and/or presently being operated on by processing unit 259. By way of example, and not limitation, Fig. 14 illustrates operating system 225, application programs 226, other program modules 227, and program data 228.

The computer 241 may also include other removable/non-removable, volatile/nonvolatile computer storage media. By way of example only, Fig. 14 illustrates a hard disk drive 238 that reads from or writes to non-removable, nonvolatile magnetic media, a magnetic disk drive 239 that reads from or writes to a removable, nonvolatile magnetic disk 254, and an optical disk drive 240 that reads from or writes to a removable, nonvolatile optical disk 253 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 238 is typically connected to the system bus 221 through an non-removable memory interface such as interface 234, and magnetic disk drive 239 and optical disk drive 240 are typically connected to the system bus 221 by a removable memory interface, such as interface 235.

The drives and their associated computer storage media discussed above and illustrated in Fig. 14, provide storage of computer readable instructions, data structures, program modules and other data for the computer 241. In Fig. 14, for example, hard disk drive 238 is illustrated as storing operating system 258, application programs 257, other program modules 256, and program data 255. Note that these components can either be the same as or different from operating system 225, application programs 226, other program modules 227, and program data 228. Operating system 258, application programs 257, other program modules 256, and program data 255 are given different numbers here to illustrate that, at a minimum, they are different copies. A user may enter commands and information into the computer 241 through input devices such as a keyboard 251 and pointing device 252, commonly referred to as a mouse, trackball or touch pad. Other input devices (not shown) may include a microphone, joystick, game pad, satellite dish, scanner, or the like. These and other input devices are often connected to the processing unit 259 through a user input interface 236 that is coupled to the system bus, but may be connected by other interface and bus structures, such as a parallel port, game port or a universal serial bus (USB). A monitor 242 or other type of display device is also connected to the system bus 221 via an interface, such as a video interface 232. In addition to the monitor, computers may also include other peripheral output devices such as speakers 244 and printer 243, which may be connected through a output peripheral interface 233.

The computer 241 may operate in a networked environment using logical connections to one or more remote computers, such as a remote computer 246. The remote computer 246 may be a personal computer, a server, a router, a network PC, a peer device or other common network node, and typically includes many or all of the elements described above relative to the computer 241, although only a memory storage device 247 has been illustrated in Fig. 14. The logical connections depicted in Fig. 14 include a local area network (LAN) 245 and a wide area network (WAN) 249, but may also include other networks. Such networking environments are commonplace in offices, enterprise-wide computer networks, intranets and the Internet.

When used in a LAN networking environment, the computer 241 is connected to the LAN 245 through a network interface or adapter 237. When used in a WAN networking environment, the computer 241 typically includes a modem 250 or other means for establishing communications over the WAN 249, such as the Internet. The modem 250, which may be internal or external, may be connected to the system bus 221 via the user input interface 236, or other appropriate mechanism. In a networked environment, program modules depicted relative to the computer 241, or portions thereof, may be stored in the remote memory storage device. By way of example, and not limitation, Fig. 14 illustrates remote application programs 248 as residing on memory device 247. It will be appreciated that the network connections shown are exemplary and other means of establishing a communications link between the computers may be used.

It should be understood that the various techniques described herein may be implemented in connection with hardware or software or, where appropriate, with a combination of both. Thus, the methods and apparatus of the invention, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the invention. In the case of program code execution on programmable computers, the computing device generally includes a processor, a storage medium readable by the processor (including volatile and non-volatile memory and/or storage elements), at least one input device, and at least one output device. One or more programs that may implement or utilize the processes described in connection with the invention, e.g., through the use of an API, reusable controls, or the like. Such programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

Although exemplary embodiments refer to utilizing aspects of the invention in the context of one or more stand-alone computer systems, the invention is not so limited, but rather may be implemented in connection with any computing environment, such as a network or distributed computing environment. Still further, aspects of the invention may be implemented in or across a plurality of processing chips or devices, and storage may similarly be effected across a plurality of devices. Such devices might include personal computers, network servers, handheld devices, supercomputers, or computers integrated into other systems such as automobiles and airplanes.

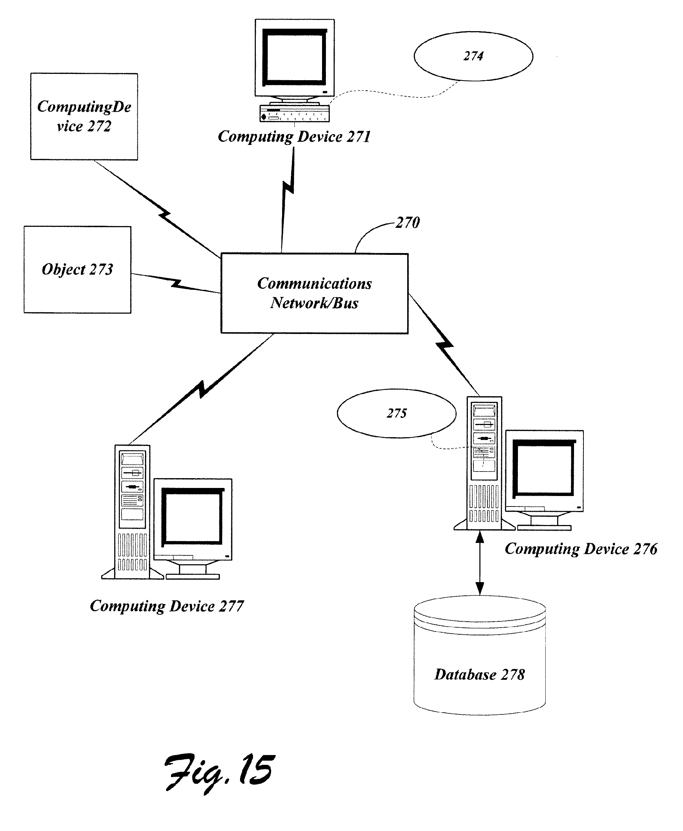

An exemplary networked computing environment is provided in Fig. 15. One of ordinary skill in the art can appreciate that networks can connect any computer or other client or server device, or in a distributed computing environment. In this regard, any computer system or environment having any number of processing, memory, or storage units, and any number of applications and processes occurring simultaneously is considered suitable for use in connection with the systems and methods provided.

Distributed computing provides sharing of computer resources and services by exchange between computing devices and systems. These resources and services include the exchange of information, cache storage and disk storage for files. Distributed computing takes advantage of network connectivity, allowing clients to leverage their collective power to benefit the entire enterprise. In this regard, a variety of devices may have applications, objects or resources that may implicate the processes described herein.

Fig. 15 provides a schematic diagram of an exemplary networked or distributed computing environment. The environment comprises computing devices 271, 272, 276, and 277 as well as objects 273, 274, and 275, and database 278. Each of these entities 271, 272, 273, 274, 275, 276, 277 and 278 may comprise or make use of programs, methods, data stores, programmable logic, etc. The entities 271, 272, 273, 274, 275, 276, 277 and 278 may span portions of the same or different devices such as PDAs, audio/video devices, MP3 players, personal computers, etc. Each entity 271, 272, 273, 274, 275, 276, 277 and 278 can communicate with another entity 271, 272, 273, 274, 275, 276, 277 and 278 by way of the communications network 270. In this regard, any entity may be responsible for the maintenance and updating of a database 278 or other storage element.

This network 270 may itself comprise other computing entities that provide services to the system of Fig. 15, and may itself represent multiple interconnected networks. In accordance with an aspect of the invention, each entity 271, 272, 273, 274, 275, 276, 277 and 278 may contain discrete functional program modules that might make use of an API, or other object, software, firmware and/or hardware, to request services of one or more of the other entities 271, 272, 273, 274, 275, 276, 277 and 278.

It can also be appreciated that an object, such as 275, may be hosted on another computing device 276. Thus, although the physical environment depicted may show the connected devices as computers, such illustration is merely exemplary and the physical environment may alternatively be depicted or described comprising various digital devices such as PDAs, televisions, MP3 players, etc., software objects such as interfaces, COM objects and the like.

There are a variety of systems, components, and network configurations that support distributed computing environments. For example, computing systems may be connected together by wired or wireless systems, by local networks or widely distributed networks. Currently, many networks are coupled to the Internet, which provides an infrastructure for widely distributed computing and encompasses many different networks. Any such infrastructures, whether coupled to the Internet or not, may be used in conjunction with the systems and methods provided.

A network infrastructure may enable a host of network topologies such as client/server, peer-to-peer, or hybrid architectures. The "client" is a member of a class or group that uses the services of another class or group to which it is not related. In computing, a client is a process, i.e., roughly a set of instructions or tasks, that requests a service provided by another program. The client process utilizes the requested service without having to "know" any working details about the other program or the service itself In a client/server architecture, particularly a networked system, a client is usually a computer that accesses shared network resources provided by another computer, e.g., a server. In the example of Fig. 15, any entity 271, 272, 273, 274, 275, 276, 277 and 278 can be considered a client, a server, or both, depending on the circumstances.

A server is typically, though not necessarily, a remote computer system accessible over a remote or local network, such as the Internet. The client process may be active in a first computer system, and the server process may be active in a second computer system, communicating with one another over a communications medium, thus providing distributed functionality and allowing multiple clients to take advantage of the information-gathering capabilities of the server. Any software objects may be distributed across multiple computing devices or objects.

Client(s) and server(s) communicate with one another utilizing the functionality provided by protocol layer(s). For example, HyperText Transfer Protocol (HTTP) is a common protocol that is used in conjunction with the World Wide Web (WWW), or "the Web." Typically, a computer network address such as an Internet Protocol (IP) address or other reference such as a Universal Resource Locator (URL) can be used to identify the server or client computers to each other. The network address can be referred to as a URL address. Communication can be provided over a communications medium, e.g., client(s) and server(s) may be coupled to one another via TCP/IP connection(s) for high-capacity communication.

As the foregoing illustrates, the invention is directed to systems and methods for providing a system level user interface in a multimedia console. It is understood that changes may be made to the illustrative embodiments described above without departing from the broad inventive concepts disclosed herein. For example, while an illustrative embodiment has been described above as applied to a multimedia console, running video games, for example, it is understood that the invention may be embodied in other computing environments. Furthermore, while illustrative embodiments have been described with respect to 4 users on the same console, embodiments having other numbers of users are also applicable. Accordingly, it is understood that the invention is not limited to the particular embodiments disclosed, but is intended to cover all modifications that are within the spirit and scope of the invention as defined by the appended claims.

## Claims

1. A method for providing a system level user interface in a gaming console used primarily for the purpose of playing games, comprising:
receiving an indication from a user of the gaming console at any time during operation of a gaming application that a system level user interface layer for the gaming console is to be displayed, wherein the system level user interface layer includes a plurality of system level user interface elements with system level functionality invocable by the user; and
displaying the system level user interface layer to the user in response to said receiving.

2. A method according to claim 1, wherein said receiving includes receiving an indication from a game controller that a button associated with the system level user interface has been pressed.

3. A method according to claim 2, further including receiving a second indication from the game controller that the button was pressed and returning to the gaming application in response.

4. A method according to claim 1, further including selecting by the user one of the system level user interface elements to perform functionality associated therewith.

5. A method according to claim 4, wherein the functionality of user interface elements include, voice chat, messaging, music playback and changing of user settings.

6. A method according to claim 1, wherein the system level user interface further includes user interface elements that are controllable by the gaming application when displayed.

7. A method according to claim 1, further including interrupting the gaming application while displaying the system level user interface layer.

8. An application programming interface comprising computer executable instructions for performing the method of claim 1.

9. A computing device comprising means for performing the method of claim 1.

10. A method for use in a computing system having a pre-defined minimal subset of memory, processing and networking resources reserved for a system level user interface layer, whereby the rest of the memory processing and networking resources are reserved for applications executed by the computing system, comprising:
receiving an indication from a user of the computing system at any time during operation of an application that the system level user interface layer is to be displayed, wherein the system level user interface layer includes a plurality of system level user interface elements with system level functionality invocable by the user; and
displaying the system level user interface layer to the user in response to said receiving.

11. A method according to claim 10, wherein said receiving includes receiving an indication from a peripheral of the computing device that a button associated with the system level user interface layer has been pressed.

12. A method according to claim 11, further including receiving a second indication from the peripheral that the button was pressed and returning to the application in response.

13. A method according to claim 10, wherein the functionality of user interface elements include, voice chat, messaging, music playback and changing of user settings.

14. A method according to claim 10, further including pausing the application while displaying the system level user interface layer.

15. A computer readable medium comprising computer executable instructions for performing the method of claim 9.

16. A computing device comprising means for performing the method of claim 9.

17. A multimedia console primarily for executing gaming and other multimedia applications, including:
a system level user interface management component for managing the display of a system level user interface layer on top of an executing gaming application in response to receiving input from a peripheral of the multimedia console relating to instantiating or exiting the system level user interface layer, whereby when executing the gaming application, receiving said input causes the system level user interface layer to be instantiated at least partly on top of the executing gaming application and whereby when the system level user interface layer is displayed, receiving said input causes the system level user interface layer to exit, wherein the system level user interface layer includes a plurality of system level user interface elements with system level functionality invocable by the user.

18. A multimedia console according to claim 17, wherein said input includes input from a peripheral of the multimedia console that a button associated with the system level user interface layer has been pressed.

19. A multimedia console according to claim 17, wherein the functionality of user interface elements include, voice chat, messaging, music playback and changing of user settings.

20. A multimedia console according to claim 17, wherein the gaming application is paused while the system level user interface layer is displayed.
